Europäisches Patentamt

European Patent Office

Office européen des brevets

(19)

(11) EP 1 596 334 A1

(12) **EUROPEAN PATENT APPLICATION**

(43) Date of publication:
16.11.2005 Bulletin 2005/46

(51) Int Cl.⁷: **G06T 7/20**, G06T 5/00

(21) Application number: 04077917.5

(22) Date of filing: 21.10.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **13.05.2004 EP 04076423**

(71) Applicant: **Technologiestichting STW**
**3527 JP Utrecht (NL)**

(72) Inventors:
• **Kröse, Bernardus Johannes Anthonius**
**3621 DE Breukelen (NL)**
• **Zajdel, Wojciech Piotr**
**1444 VN Purmerend (NL)**
• **Cemgil, Ali Taylan**
**1062 KD Amsterdam (NL)**

(74) Representative:
**Land, Addick Adrianus Gosling et al**
**Arnold & Siedsma**
**Sweelinckplein 1**
**2517 GK Den Haag (NL)**

(54) **A hybrid graphical model for on-line multicamera tracking**

(57)    The present invention provides a method for tracking of multiple objects or individuals with non-overlapping or partly overlapping cameras, wherein each object is identified with a label and wherein a probabilistic dependency between the labels and the observations of objects is defined wherein the posterior probability distributions in the model are in the form of mixtures, wherein the mixture is approximated.

FIG. 1

EP 1 596 334 A1

## Description

Tracking objects (e.g. people, cars) in wide areas such as airports or shopping centres becomes increasingly important for automated surveillance and security applications. Such places are usually equipped with closed-circuit TV (CCTV) systems. These systems comprise a network of sparsely distributed cameras, where a camera provides only information about local appearances of objects within its field of view (FOV). Wide-area tracking aims to reconstruct global trajectories of objects given their local appearances. Typically, the number of objects is large and viewing fields of cameras do not cover the entire region of interest. Therefore, methods developed for visual tracking within a single-scene are not immediately applicable to problems with sparsely distributed cameras. In single-scene-single-camera [12], [14], [17] or single-scene-multi-camera [5], [16], [24] scenarios, tracking takes place at a frame-to-frame level. In this case, smooth motion provides essential cues for resolving association ambiguities.

Distributed, multi-camera tracking takes place at a camera-to-camera level. Observations (e.g. local appearance features) arrive one at a time, within irregular time intervals as objects move from one camera location to another. The time gap between successive observations of the same object may be very long. This hinders the use of smooth motion cues that facilitate tracking in a single-scene setting. Therefore, tracking with sparse cameras relies on appearance similarities and movement constraints imposed by the topology of camera locations.

A main problem in multi-object tracking is the association of the incoming sensory observations with trajectories. Typical sensors, such as cameras, cannot directly observe the identity of an object. Due to this inherent observation ambiguity, the number of possible associations grows rapidly with the number of objects and with the number of observations. This explosion renders exact calculation of interesting quantities such as the most likely association intractable [2] and one has to reside to approximate techniques.

A popular approximate technique for finding likely associations is multiple hypotheses tracking (MHT) [2]. In the context of tracking with non-overlapping cameras, an MHT algorithm was applied in a campus monitoring system [6]. MHT is an on-line, deterministic algorithm that maintains a list of high probability associations and prunes trajectories with low probability. It is usually a fast and easy to implement method. However, it is a heuristic approximation method with limited accuracy. Moreover, pruning does not allow to preserve any information about the discarded trajectories. In noisy environments, such information could be necessary for proper association of future observations.

Alternatively, data association can be solved using approaches with a sound theoretical basis, like stochastic approximation methods: Markov Chain Monte Carlo (MCMC) [11] or sequential Monte Carlo (SMC, also known as particle filters)[8]. An MCMC method was applied for tracking vehicles with multiple cameras on a motorway network [20]. Stochastic methods have the attractive theoretical property that with increased computational resources, on average, they are guaranteed to give better solutions. However, in practice, the promised accuracy is obtained at a very high computational cost.

Furthermore, foreground/background classification of pixels is an important preprocessing step in many computer vision problems, such as object tracking and identification
where one wishes to suppress background pixels to collect reliable statistics about object features of interest. Clearly, a practical method has to be robust since all the subsequent inference depends on it, but it needs to be also efficient to meet eventual real-time operation requirements.

In typical visual scenes populated with several distinct objects, it may not be clear which object(s) should be assigned to the foreground. The key assumption here is that the visual sensors and the background image are static and objects of interest are in motion (e.g. people walking in a room full of furniture). Transient deviations from "steady-state" pixels values are detected and associated with foreground objects. Unfortunately, in reality, a background scene is almost never entirely static due to illumination changes, shadows, reflections, fog, wind or camera jitter [35]. All these factors render simple heuristics such as thresholding pixel differences useless.

From a statistical viewpoint, background estimation can be viewed as a novelty detection problem, e.g. [27]. Either implicitly or explicitly, probabilistic approaches attempt to estimate a process for the background pixels and try to detect "surprises". However, mainly due to computational considerations, many methods (e.g. [27, 34]) ignore spatial dependencies among neighbouring pixels and only take temporal correlations into account. More recently, spatial correlations among pixels are implicitly taken into account by using a fixed basis transform [35] or are explicitly modelled using Markov random fields [37, 33].

### Summary of invention

According to a first aspect, the present invention provides a method for tracking of multiple objects with non-overlapping or partly overlapping cameras. Furthermore, the present invention provides a system comprising one or more processing units, two or more non-overlapping cameras operatively connected to the processing units and software stored in memory to execute the above mentioned methods.

The preferred embodiments are dedicated to non-overlapping cameras, although applications for partly overlapping cameras are very well conceivable, although not yet realised in experience. The above method provides for tracking of multiple objects with non-overlapping cameras, wherein each object is identified with a label and wherein a probabilistic dependency between the labels and observations of objects is defined, wherein the posterior probability distributions in the model take the form of mixtures, wherein the mixture is approximated.

The above method preferably assumes that an observation of an object includes appearance features defined as three colour vectors, wherein each colour vector is the average colour of pixels within one of three horizontal regions selected from the object's image. The method preferably assumes that the appearance features from all observations of a single object are generated by a single Gaussian distribution. The method preferably estimates the parameters of object's specific Gaussian model (mean, covariance matrix) with a Bayesian inference scheme, where the mean and the covariance are given a joint "Normal-Inverse Wishart" prior. Such an approach avoids iterative search for maximum-likelihood estimates of these parameters.

The method preferably assumes that appearance features of all objects are generated by a Dirichlet process mixture model, which is used for estimation of the number of distinct objects from the data. The Dirichlet process mixture model is preferably extended with auxiliary variables that allow to model Markovian dependencies between spatio-temporal observations of the same object.

The method preferably estimates trajectories of objects by computing posterior distribution of the labels conditioned on the available observations, wherein an assumed-density filtering (ADF) algorithm is used for online computation of filtered distributions of the model's latent variables.

According to a further aspect, the present invention provides a method for background/foreground classification of pixels in a visual scene, wherein the class of each pixel is identified with a binary mask variable, and wherein a probabilistic dependency between the observed pixels and their masks is defined, wherein long-range correlations between masks are a-priori imposed.

The method according to this further aspect imposes long-range correlations between pixel binary masks by assuming that each binary mask is obtained by taking the sign of a corresponding continuous variable. The correlations are a-priori imposed by defining a joint prior Gaussian distribution on all continuous variables.

The method preferably maintains the mask's long-range correlations across consecutive frames of a video sequence by assuming the continuous variables evolve between frames according to linear Gaussian process.

The method preferably estimates the masks by computing posterior distributions of binary variables conditioned on the observed pixel values, wherein the posterior distribution are approximated with an Expectation-Propagation algorithm.

Brief description of the drawings

Fig. 1 shows an example of the considered tracking problem. In this example, there are three non-overlapping cameras: "A", "B" and "C" that observe local scenes in a building.

Figs. 2 - 7 depict a complete pass (event) of a person through a camera viewing field. Six observations (events) are being shown corresponding to three different persons. The goal of tracking is to reconstruct global trajectories between the cameras.

Fig. 8 shows a graphical representation of the generative model. The continuous random variables are shown as ovals, the discrete - as rectangles. For clarity the arcs between observations that mark the dependencies induced by the dynamics $D_k$ were not drawn.

Fig. 9 shows a compact graphical representation of the generative model. This representation captures the essential structure of the model. A single node $H_k$ represents now all association-related variables $\{S_k, C_k, Z_k^{(1)},..., Z_k^{(k)}\}$ at slice $k$. This representation shows the relationship with Dirichlet process mixture models and mixed-memory Markov models.

Figs. 10A and B show a building plan were observations for experiments were taken. The grey areas show camera viewing fields.

Fig. 10C shows the movement constraints assumed by the distributions $P_\delta$ and $P_{\delta 0}$. Arrows indicate possible transitions. All other transitions have zero probability.

Figs. 11A and B show results of tracking with the hybrid model. The columns correspond to filtering steps; $k = 1,...,$

70.

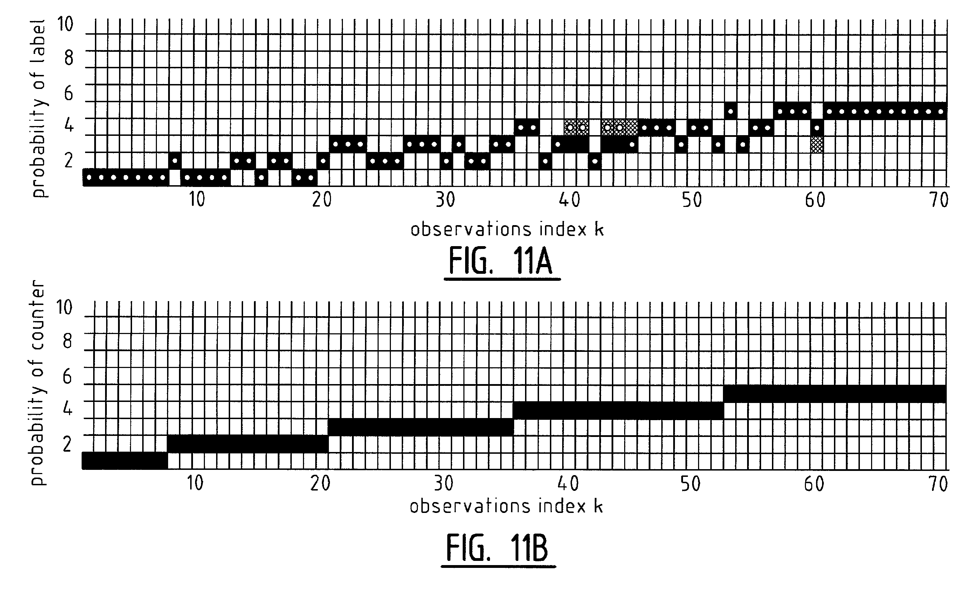

Each column in Fig. 11A gives a filtered distribution of label; $Q_k(S_k)$. The true labels are indicated as dots.

Fig. 11B shows a filtered distribution of counter; $Q_k(C_k)$ in each column.

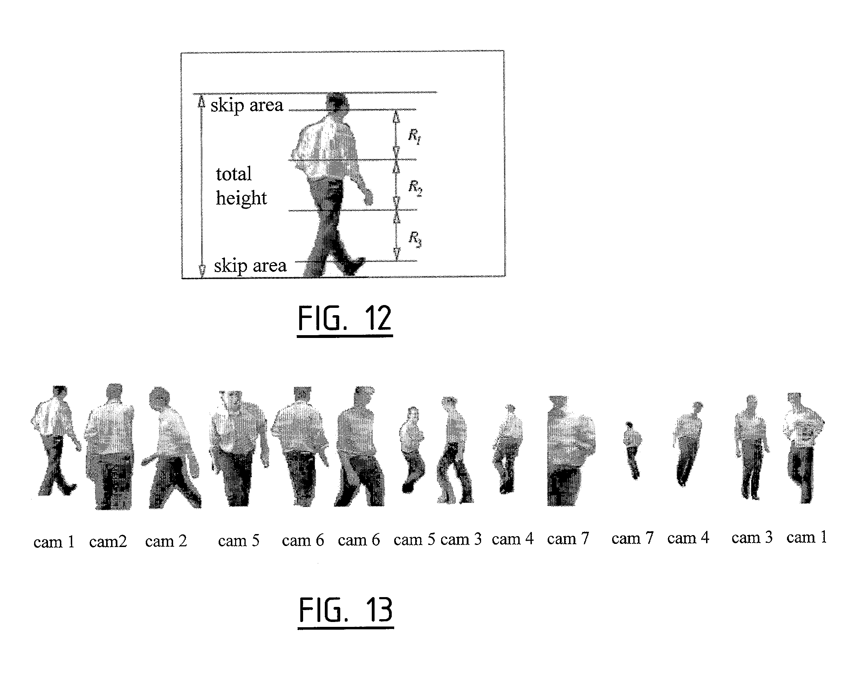

Fig. 12 shows appearance features of a person. The appearance is described with three colour vectors. Each colour vector is the average colour of pixels within one of the three horizontal regions $R_1, R_2, R_3$ selected in the image. The height of a region is 25% of the persons' height. The "skip" areas are meant to remove parts that have little discriminative power. Their height is fixed at 12.5% of the total height.

Fig. 13 shows an example of a recovered trajectory. The sequence of images represents local appearances at the indicated cameras. The trajectory includes such observations $Y_i$ that have labels $S_i = 5$, as shown in Fig. 11A.

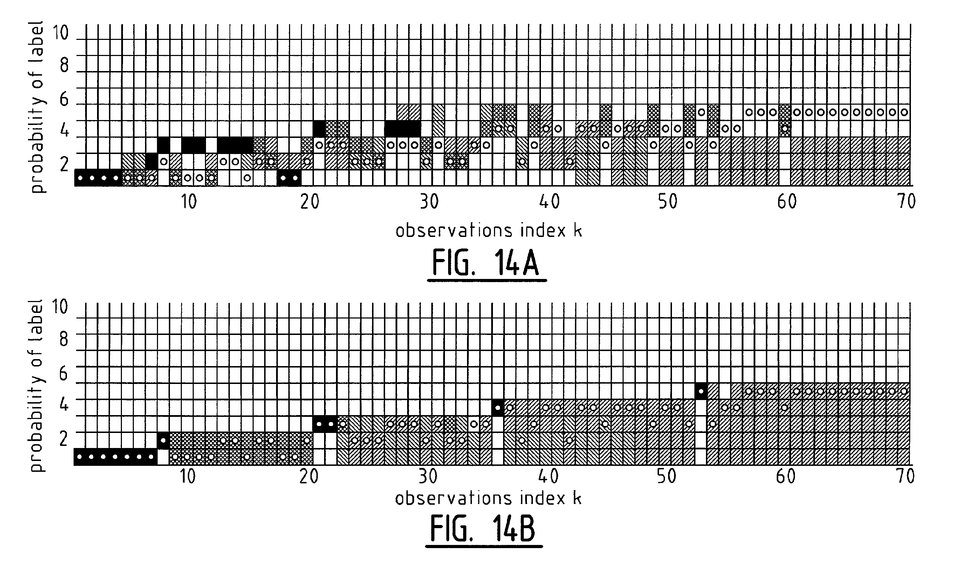

Fig. 14A shows results of tracking using only the appearance features.

Fig. 14B shows results of tracking using only the dynamic features.

In both cases, columns show the filtered distribution of labels $Q_k(S_k)$, for $k = 1,...70$. The true labels are indicated as dots.

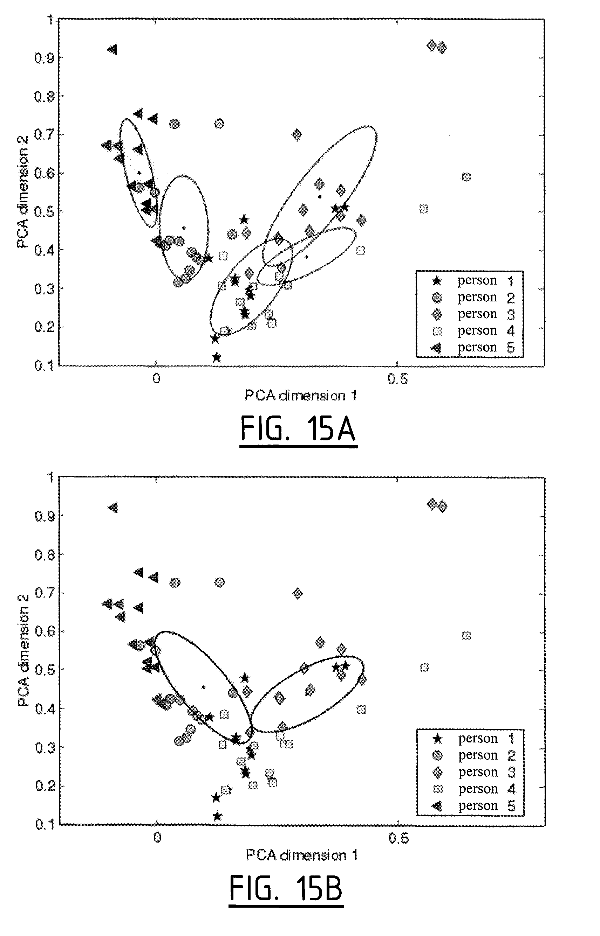

Fig. 15A shows the expected kernels (expected mean and expected covariance) shown as a 2D PCA projection of the original 9D feature space, obtained when tracking was based on dynamics and appearance features.

Fig. 15B shows the expected kernels (expected mean and expected covariance) shown as a 2D PCA projection of the original 9D feature space, the kernels obtained when tracking was based only on appearance features.

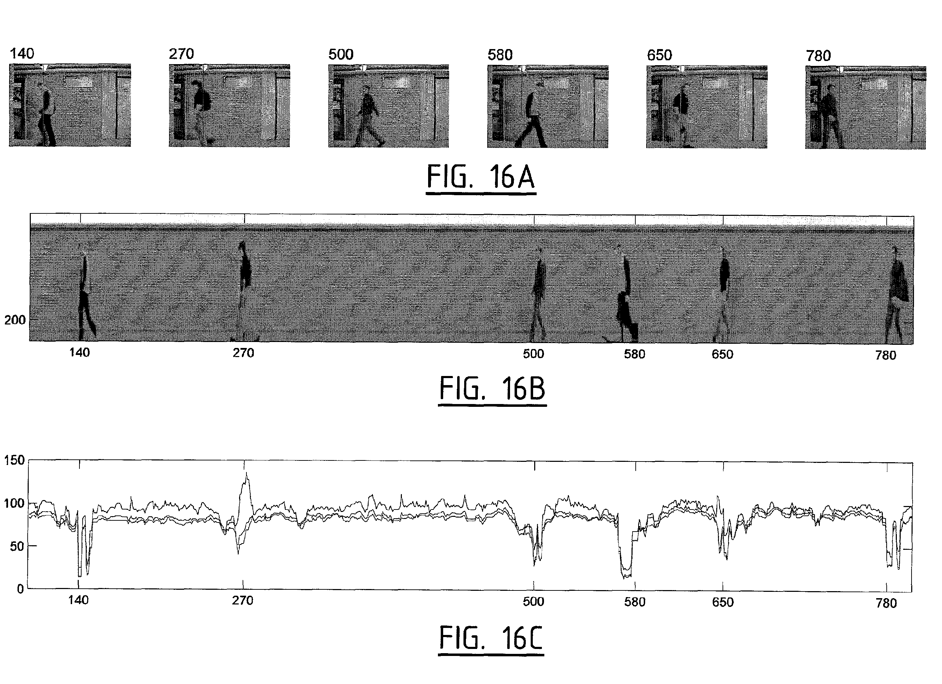

Figs. 16A-16C show a few video frames from an office scene.

Fig. 16A shows a vertical slice through time, taken along the vertical line shown in Fig. 16B on the video frames and variations in RGB values of a single pixel (at row 200) in Fig. 16C. Occlusions and shadows can be clearly seen as immediate changes in intensity. Fluctuations in a single color channel illustrate the difficulty of detection when pixels are processed independently.

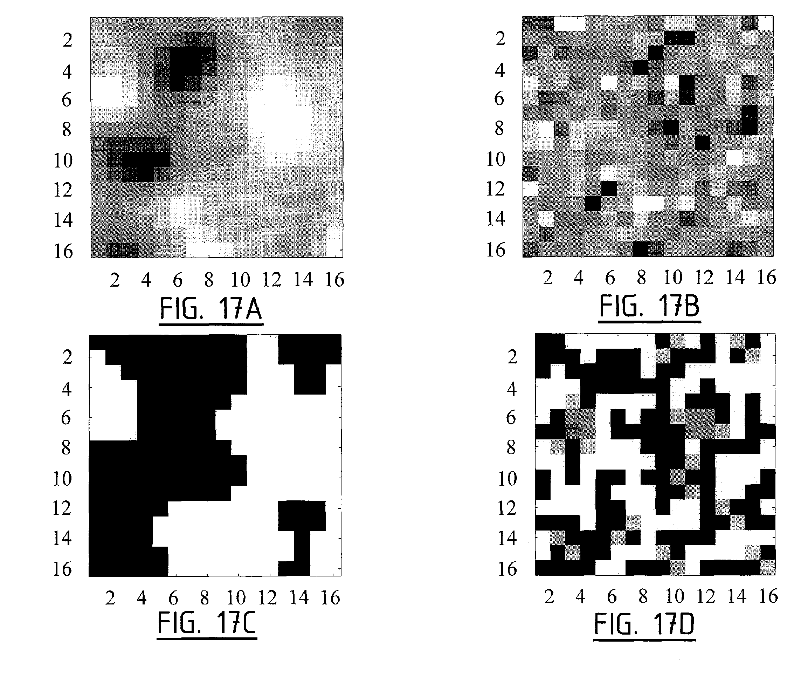

Figs. 17A-17D show random draws from correlated Gaussians on 256 dimensions arranged as a 16 x 16 grey scale image at the top row. The correlation matrix of these Gaussians is chosen such that the correlation between two pixels values is a function of spatial distance between them. The left column corresponds to strong correlation and right column to weak correlation. The bottom row shows the signs of greyscale images as a binary image. By adjusting the correlation matrix of the latent continuous variables x, we can generate different distributions over possible masks r.

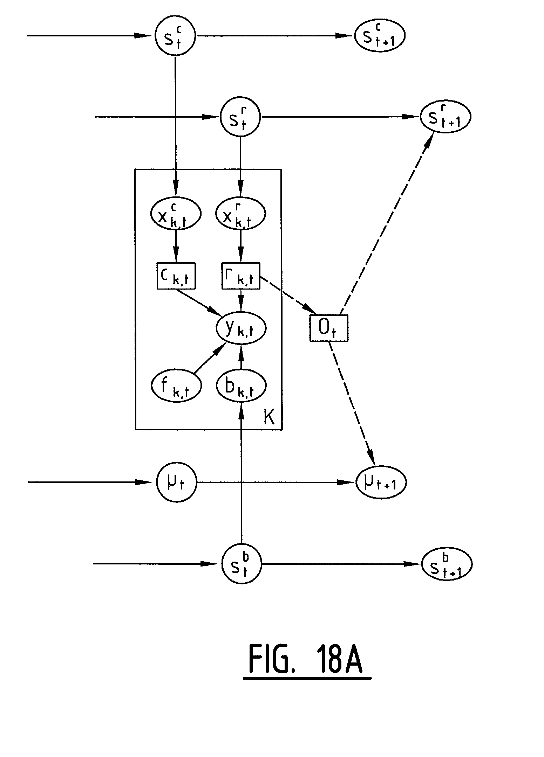

Fig. 18A shows a graphical model of a single time frame. The rectangles are plates that denote $K$ repetitions of nodes inside. Square and oval nodes correspond to discrete and continuous variables, respectively. Variables $f$, $b$ and $y$ are vectors denoting the RGB components. Dotted arcs correspond to the regime switch mechanism that is triggered when an object leaves the scene.

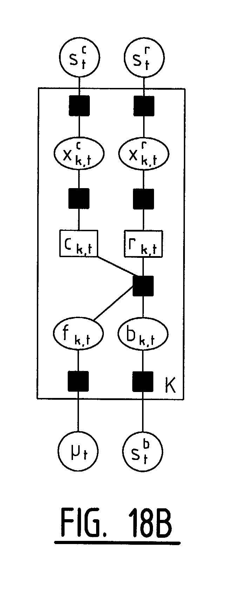

Fig. 18B shows a loopy factor graph of a single slice used in EP iterations. Forward messages to the next time slice (not shown) are passed only once.

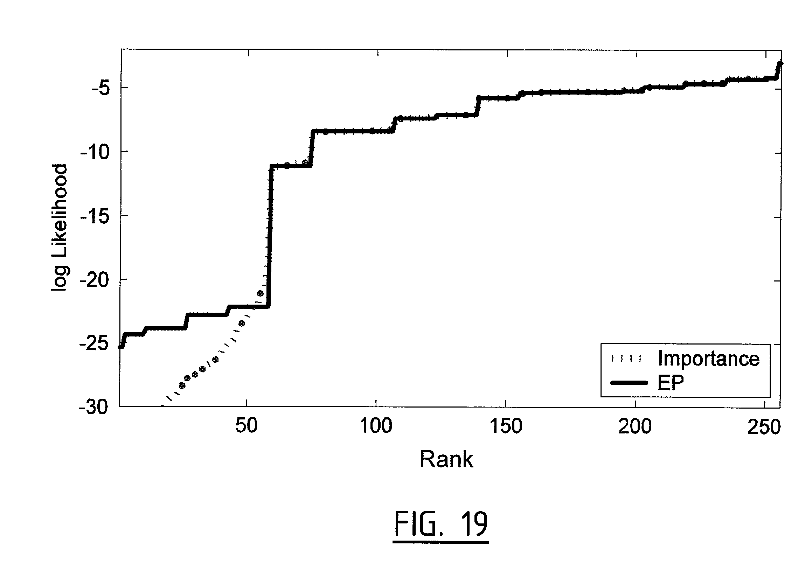

Fig. 19 shows comparison of EP with importance sampling, for $K = 8$. We use a truncated Fourier basis $Wr(k) = [1, \sin(\omega k), \cos(\omega k)]$ with $\omega = 2nK$ with $Rr = 0.1^2 I$, $mr = 0$. Note that many configurations have the same probability since $mr=0$. For importance sampling we have drawn $10^7$ samples independently from $s_r$ and integrate over $x_r$ to compute $p(r)$.

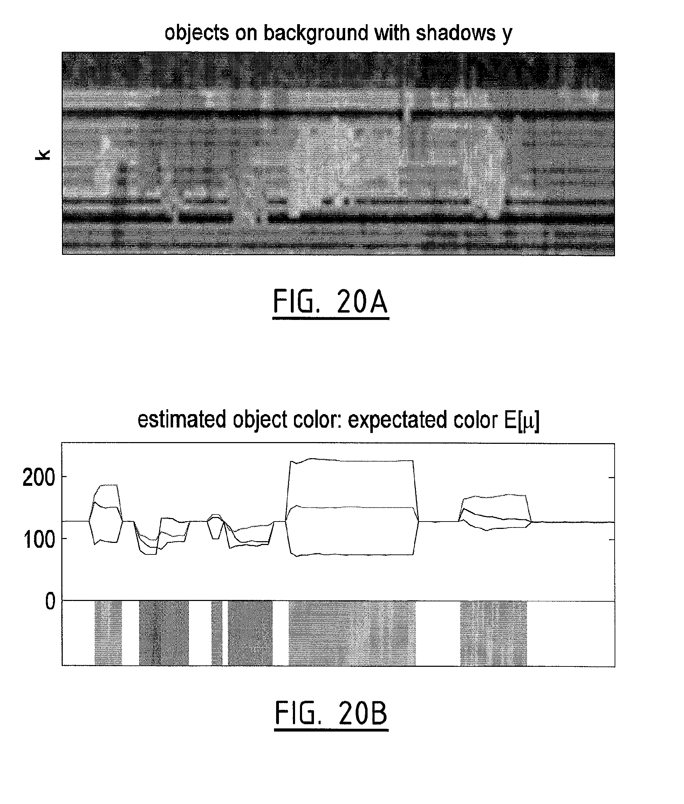

Fig. 20A shows typical data generated from the model.

Fig. 20B shows estimated means of colour features $\mu(t)$.

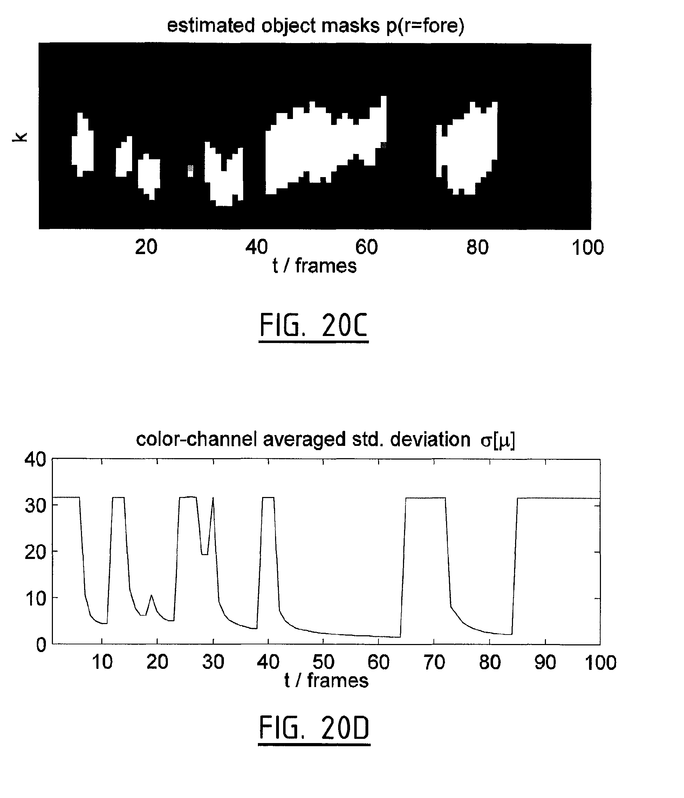

Fig. 20C shows filtered estimates of object masks.

Fig. 20D shows standard deviations of colour features $\mu(t)$.

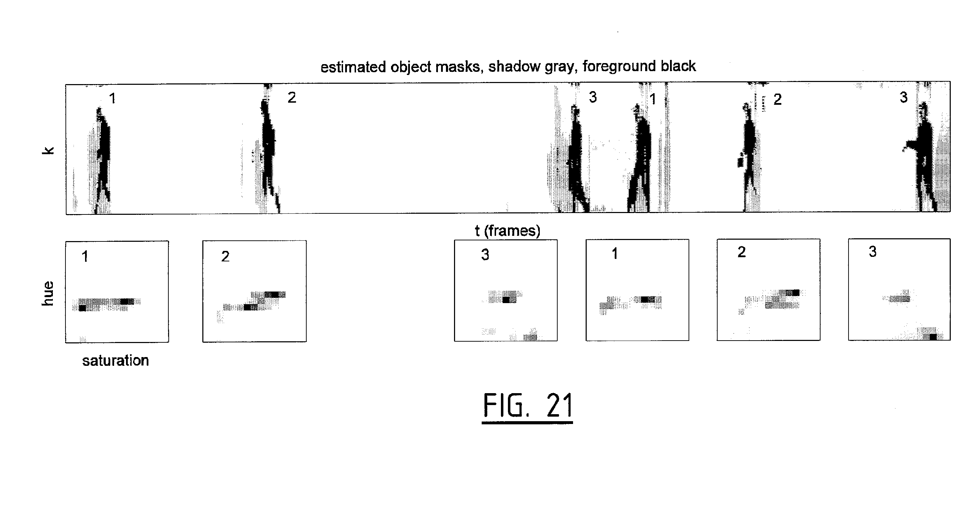

Fig. 21 shows colour features estimated from the video sequence in Fig. 16B with superimposed filtered estimate of asks at the top and colour histograms in HSV space at the bottom.

Overview

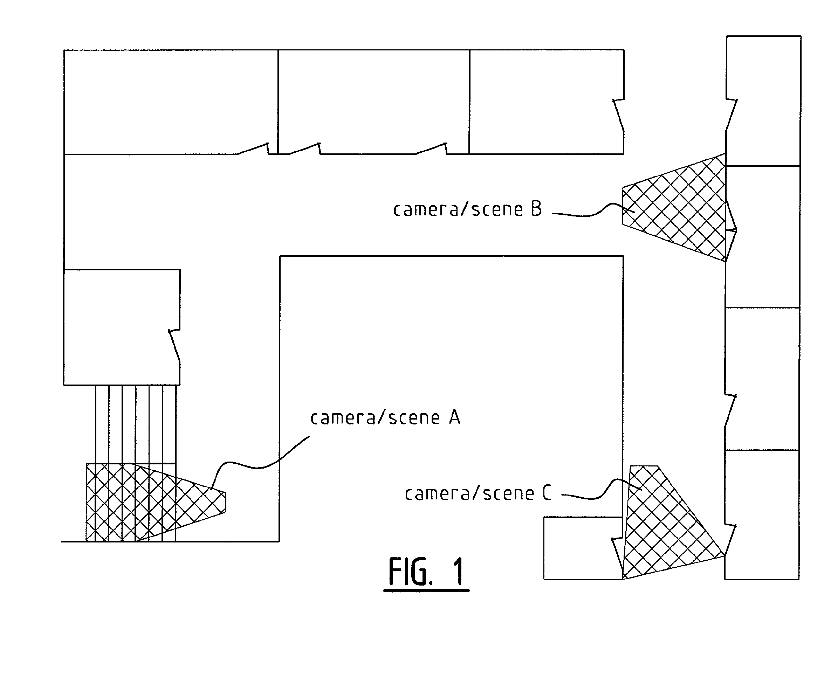

Tracked people are observed in a building that is equipped with a network of non-overlapping (or partly overlapping) cameras A, B, C, e.g. as in Fig. 1. A camera can track a person through its FOV. As soon as the person leaves the viewing field, the camera reports a summarized description of the person. Such a description is our primarily input, so it is referred to as an observation. Observations from all cameras are processed centrally.

Input Assumptions

Let $Y_k, k = 1,2,...$, denote the $k$th in time order observation from any camera. An observation includes two components; $Y_k = \{O_k, D_k\}$. The symbol $O_k$ represents appearance, e.g. color features computed while a person was visible within an FOV. The symbol $D_k$ represents spatio-temporal features of the observation, e.g. the location and the time of observation.

An important feature of the approach is not to assume a fixed number of tracked objects beforehand. Given a sequence of observations $\{Y_1, Y_2,...\}$ the task is on-line association of a new observation $Y_k$ and estimation of the number of distinct individuals found in the data.

Approach

The idea underlying the approach is to identify each person with an unique label, and view the sequence of local appearances as noisy observations from the hidden labels. The observations and their labels are treated as random variables with a probabilistic dependency $P(\text{Events}|\text{Labels})$ in the form of a generative model. Given the model, tracking is simply computing the posterior probabilities of the labels conditioned on the observations:

$$P(\text{Labels}|\text{Events}) \propto P(\text{Events}|\text{Labels})P(\text{Labels}),$$

where P(Labels) is the prior information about the trajectories. The posterior is used to select the most likely label for every observation. Such a probabilistic strategy is attractive since the causal relationship $P(\text{Events}|\text{Labels})$ is more intuitive to specify than direct finding of trajectories.

The proposed generative model allows to apply any inference method for computing the posterior probabilities given the observations. However, due to the intractability of the data association, only the approximate methods are practical [19]. In this paper, an on-line, assumed-density filtering algorithm [4] is applied. Note that, the generative model can also be a basis for a multiple hypothesis tracker; in this case the model evaluates the likelihood of trajectories.

Generative model

Generative model for appearance

The appearance is described with a d-dimensional vector of colour features. It is assumed that the underlying color (or generally, any other intrinsic property) of a person remains constant. However, because of the varying illumination and viewing angle (pose), the reported features $O_k$ will differ every time the person is observed. The effects of such variations are treated as observation noise. A person is modelled as a colour process and $O_k$ is assumed to be a sample from a Normal distribution specific to the observed person.

For every observed $O_k$, a latent kernel is introduced from which $O_k$ is sampled. A kernel is a Normal density, represented with parameters $X_k = \{m_k, V_k\}$. The $dx1$ vector $m$ describes the expected, person's specific features. The $dxd$ covariance matrix $V$ models the sensitivity of the person's appearance to the changing illumination conditions or pose. For instance, the appearance of somebody dressed uniformly in black is relatively independent of illumination or pose, so his/her covariance $V$ has small eigenvalues. This is in opposition to a person dressed in white or non-uniform colours. The observed colour features differ significantly under different colour of the illuminating light or different pose, so such a person is modelled by a "broad" kernel, i.e., $V$ with large eigenvalues. The model implies that the noise structure depends exclusively on the person and not on the local camera environment. Moreover, given $X_k$, the observed features $O_k$ are independent of the association with other observations.

The parameters $X = \{\boldsymbol{m},\boldsymbol{V}\}$ are treated as hidden random variables that are given a joint prior distribution $\pi(X)$. In Bayesian statistics [10], a convenient joint model for the mean $\boldsymbol{m}$ and covariance $\boldsymbol{V}$ of a Gaussian kernel is a product of a Normal *(N)* density w.r.t. $\boldsymbol{m}$, and an Inverse Wishart *(IW)* density w.r.t. $\boldsymbol{V}$. The *IW* model is a multivariate generalization of the Inverse Gamma distribution. The joint *N-IW* density is denoted as:

$$\pi(X) = \varphi(X|\theta_0),\qquad\qquad(1)$$

where $\theta_0$ is a vector of hyperparameters defining the prior density. Appendix II-A provides details of this model.

Generative model for dynamics

The spatio-temporal features $D_k$ of a detected person are referred to as dynamics. Only such dynamics that can be assumed noise-free are selected: the camera location, time of observation and the borders of entering and leaving an FOV. A sequence of dynamics $\{D_1^{(n)}, D_2^{(n)},... \}$ assigned to nth person (denoted by the superscript) defines a path in the building. The sequence $\{D_1^{(n)}, D_2^{(n)}, ... \}$, is modelled as a random, first order Markov chain. The path is started by sampling from an initial distribution $P_{\delta0}$, and extended by sampling from a transition distribution $P_\delta(D_{k+1}^{(n)}|D_k^{(n)})$. The assumption of first order Markov transitions implies that to generate dynamics $D_k$, only knowledge about the dynamics of the last observation assigned to a trajectory which $D_k$ extends, is needed.

The distributions $P_\delta$ and $P_{\delta0}$ follow from the topology of FOVs. For example, consider Fig. 1 and assume that $D_k$ includes only the camera location. In this case, $P_{\delta0}(c)$ gives probabilities of starting a trajectory at a location $c \in \{$"A","B","C"$\}$; One can assume $P_{\delta0}($"A"$) = P_{\delta0}($"C"$)$ » $P_{\delta0}($"B"$)$ for it is very unlikely to appear first at "B". The quantity $P_\delta(c|s)$ gives probabilities of appearing at a location $c$ when starting from a location $s$. It can be assumed that $P_\delta($"A"$|$"A"$) = P_\delta($"B"$|$"A"$)$ » $P_\delta($"C"$|$"A"$)$, because it is unlikely to move from "A" to "C" without being observed at "B".

Generative model for a sequence of observations

The generative models for features $O_k$, $D_k$ become components of the generative model for a sequence of observations $\{Y_1, Y_2,...\}$. Another component are the association variables that define trajectories. The model is organized into slices that are indexed by corresponding observations.

   1) Association variables: For every observation $Y_k$ there is a corresponding variable $S_k$ that denotes the label of the person to which $Y_k$ is assigned. Within the first $k$ data, $Y_{1:K} \{Y_1, Y_2,...\}$, there may be at most $k$ different people, so $S_k$ has $k$ different states; $S_k \in \{1,...,k\}$. Given the labels, the trajectory of the nth person can be recovered by taking all observations $\{Y_i\}$ that satisfy $S_i = n$.
   At every slice $k$, the label $S_k$ is accompanied by a set of auxiliary variables: a counter $C_k$, and pointers $Z_k^{(1)},..., Z_k^{(k)}$. The counter, $C_k \in \{1,...,k\}$, indicates the number of trajectories present in the data $Y_{1:k}$. The nth pointer variable, $Z_k^{(n)} \in \{0,...,k - 1\}$, denotes the slice when the nth person was last observed before slice k. Value $Z_k^{(n)} = 0$ indicates that person $n$ has not yet been observed. At the slice $k$ there can be up to $k$ persons, so variables $Z_k^{(n)}$ for n = 1,...,$k$ are needed.
   Auxiliary variables only summarize the past associations. For instance, the counter is the maximum label used so far; $C_k = \max\{S_1,...,S_k\}$. The auxiliary variables provide an instant look-up reference to the necessary information that is encoded by a sequence $S_{1:k}$. Therefore, the transitions of the labels are first-order Markovian.
   2) One-slice generation: Our generative model builds observations one-by-one. Initially, the counter indicates that there were no objects observed; $C_0 = 0$.

The first step is to decide upon which person will be observed at the slice $k$. Recall that $C_{k-1}$ gives the number of different people observed so far. People enter FOVs irregularly, so a uniform choice is made between observing one of the known $C_{k-1}$ persons or introducing a new one;

$$S_k \sim \text{Uniform}(1,...,C_{k-1},C_{k-1} + 1) .\qquad\qquad(2)$$

The uniform distribution is one choice; other distributions are also applicable. Given the label, the counter and auxiliary pointers are updated deterministically

$$C_k = C_{k-1} + [S_k > C_{k-1}], \tag{3}$$

$$Z_k^{(k)} = 0, \tag{4}$$

$$Z_k^{(n)} = Z_{k-1}^{(n)}[S_k \; n] + (k-1) [S_k = n] \tag{5}=$$

where $n = 1,...,k$-1. The symbol $[f]$ is an indicator; $[f] \equiv 1$ if the binary proposition $f$ is true, and $[f] \equiv 0$ otherwise. If the label indicates a new person, $S_k = C_{k-1}+1$, then the counter increases, as in (3). The pointers summarize associations before slice $k$, so they are updated using $S_{k-1}$, as in (4)-(5). A person labelled as $k$ cannot be observed before slice $k$, so the pointer to his/her previous observation $Z_k^{(k)}$ is set to zero. The pointer to the past observation of the $n$th, $n < k$, person either does not change or is set to the index of the preceding observation, $k$ - 1, only if the label of this observation was $S_{k-1} = n$.

The second step is generating the latent parameters $X_k$ of the person indicated by $S_k$. If this person has been already observed, then the index of his last observation $Z_k^{(S_k)}$ is nonzero. By the assumption that the latent parameters do not change, so $X$ is simply copied from the slice $Z_k^{(S_k)}$. If the current person is observed for the first time, $Z_k^{(S_k)} = 0$, then the parameters are sampled from prior $\pi(X)$. Let $i = Z_k^{(S_k)}$

$$X_k = X_i [i > 0] + X^{new} [i = 0], \tag{6}$$

$$X^{new} \sim \pi(X). \tag{7}$$

The final step is rendering the observation $Y_k = \{O_k, D_k\}$ given the parameters of a Gaussian kernel $X_k = \{m_k, V_k\}$ and the pointer to the past dynamics of the current object $Z_k^{(Sk)}$. The generative models of the colour features and dynamics are used. Let $i = Z_k^{(Sk)}$

$$O_k \sim N(m_k, V_k), \tag{8}$$

$$D_k \sim P_\delta(D_k|D_i) [i>0] + P_{\delta 0}(D_k) [i=0]. \tag{9}$$

Graphical representation

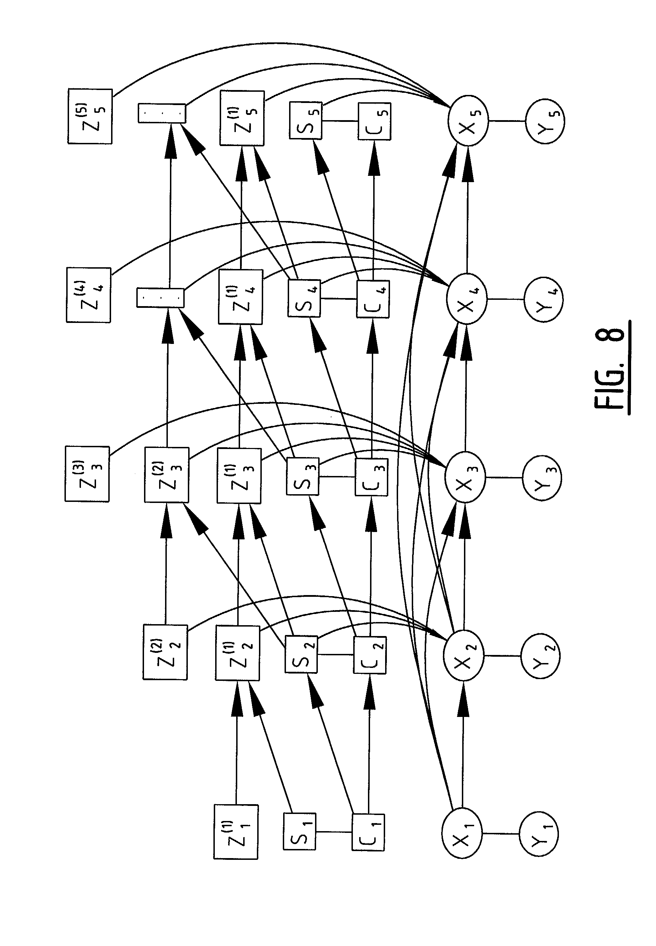

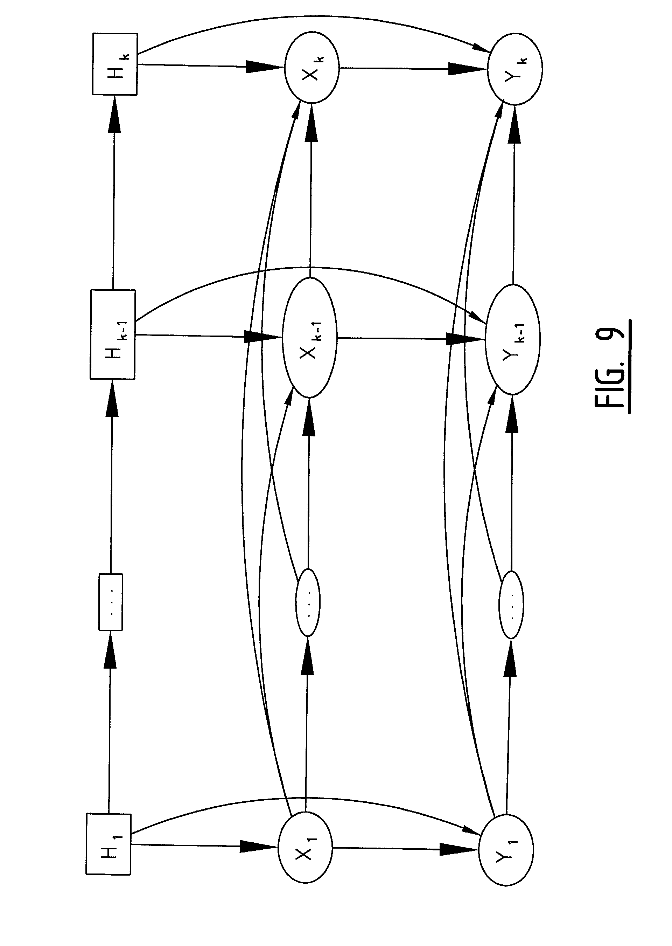

It is useful to think about the interaction between labels, kernel parameters, and observations using the language of Dynamic Bayesian Networks (DBNs) [19] . In this formalism, a random variable is represented as a node in an acyclic directed graph, and a causal relation as an edge. Fig. 8 shows a graphical representation of the first five slices of our model. Table I shows an example of generated data. Every column denotes the variables corresponding to a single slice of the generative process. In the rest of the paper, a variable $H_k = \{S_k, C_k, Z_k^{(1)},...,Z_k^{(k)}\}$ is used to denote the discrete-valued association variables at the kth slice. Fig. 9 shows the corresponding compact graph.

Table I

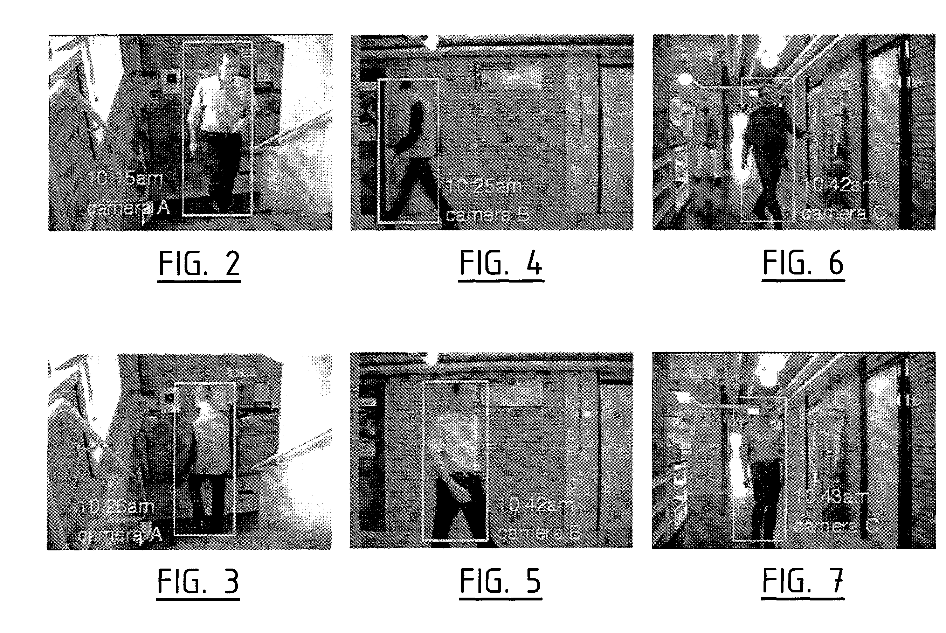

Example of a generated sequence with five observations of three persons is shown. In this toy example, the appearance is modelled with one dimensional features $O_k$. The features $O_k$ are generated by sampling from one dimensional kernels. The features $D_k$ include time and location, that correspond to Figs. 1-7.

| $k$ | 1 | 2 | 3 | 4 | 5 |
|---|---|---|---|---|---|
| $S_k$ | 1 | 2 | 2 | 1 | 3 |
| $C_k$ | 1 | 2 | 2 | 2 | 3 |
| $Z_k^{(1)},...,Z_k^{(k)}$ | {0} | {1,0} | {1,2,0} | {1,3,0,0} | {4,3,0,0,0} |
| $X_k=\{m_k,V_k\}$ | {5,2} | {1,0.5} | {1,0.5} | {5,2} | {3,1} |
| $O_k$ | 6.68 | 0.91 | 1.08 | 4.94 | 4.06 |
| $D_k$ | 10:15am/A | 10:25am/B | 10:26am/A | 10:42am/B | 10:42am/C |

Generating a new observation extends the graph with a new column of nodes that depend on the past ones. Fig. 9 shows that the discrete variables $H_k$ evolve as a Hidden Markov Model with a transition distribution $P(H_k|H_{k-1})$ following from (2)-(5). The auxiliary variables evolve deterministically when conditioned on the labels. It is also noted, that the evolutions of parameters X are a Dirichlet process (DP) mixture model. DP models are applied for Bayesian inference of mixture distributions. Under such a model, the prior for parameters of a new component density can be represented as a mixture of a global prior and Delta densities centred around parameters of other components. To see the relationship with the model, consider equation (6): when we integrate over variable $Z_k^{(S_k)} \in \{0, ..., k-1\}$ then the variable $X_k$ will be distributed according to a density which is a mixture of the prior $\pi(X_k)$ and k - 1 Delta distributions $\delta(X_k - X_j), j = 1,..., k - 1$.

The evolutions of parameters $X$ can be also interpreted as a mixed-memory Markov process [19], [23]. The transition distribution $P(X_k|X_{1:k-1},H_k)$ follows from (6) - (7) . The variables $X_{1:k-1}$ become a "memory", since they have to be stored for future extensions of the graph. The node $H_k$ becomes a discrete "switch" that selects one $X$ from the past $X_{1:k-1}$. The parameters $X_k$ are generated using only this selected variable (in our case simply copied) or sampled from the prior.

### On-line tracking

In the previous section a probabilistic model is defined as a procedure that in a single iteration generates a new observation on the basis of past observations. This model is applied to develop a procedure that in a single iteration finds the posterior distribution on the label of an incoming observation given the current and the past observations.

When an observation $Y_k$ arrives, the necessary hidden variables, including the label are estimated. First a predictive distribution is computed on the variables given the past data $Y_{1:k-1}$. Next, the predictive distribution is updated with $Y_k$, yielding a posterior distribution. From the posterior the most likely label $S_k$ is taken, which resolves the association of $Y_k$. Such prediction-update steps are typical to filtering in probabilistic models (e.g. a Kalman filter).

### Background

In Markovian models filtering exploits the fact the current hidden nodes $X_k$, $H_k$ are conditionally independent from $Y_{1:k-1}$ given the set of parents[1] $Pa(X_k,H_k)$. This allows to find predictive distribution by combining two terms: (i) the transition distribution from the parents to the current nodes; and (ii) the posterior distribution of the parents conditioned on past data $Y_{1:k-1}$. Typical DBNs are first-order Markovian, so the parents of the current hidden nodes are just the hidden nodes from the previous slice, and their posterior is automatically available (cf. forwards pass [19]). However, the model of Fig. 9 is non-Markovian. The set of parents $Pa(X_k,H_k)$ is $\{X_{1:k-1},H_{k-1}\}$. It includes every past memory node $X_{1:k-1}$, thus to compute predictive distribution at slice $K$, the term $P(X_{1:k-1},H_{k-1}|Y_{1:k-1})$ is needed. As a result, when processing the $k$th observation $Y_k$ the joint distribution $P(X_{1:k},H_k|Y_{1:k})$ has to be found, because the variables $\{X_{1:k},H_k\}$ will be the parent set for the next slice hidden nodes.

The main tracking objective is finding the distribution $P(X_{1:k},H_k|Y_{1:k})$ after receiving every new datum $Y_k$ (i.e., when $k$ increases). This distribution resolves the association of the current $Y_k$ and provides information necessary for associating future observations. First, the joint predictive distribution is computed:

$$P(X_{1:k},H_k|Y_{1:k-1}) = \sum_{H_{k-1}} P(H_k|H_{k-1}) P(X_k|X_{1:k-1},H_k) P(X_{1:k-1},H_{k-1}|Y_{1:k-1}) . \qquad (10)$$

[1] A node A is a parent of node $B$ if there is an arc going directly from $A$ to $B$. The parents of $\{H_k,X_k\}$ are found from the graphical model of Figs. 8 and 9.

The predictive distribution is updated with the new observation (Bayes' rule):

$$P(X_{1:k},H_k|Y_{1:k})=\frac{1}{L_k}\,P(Y_k|X_k,H_k)P(X_{1:k},H_k|Y_{1:k-1}),\qquad(11)$$

where $L_k$ is normalization constant. The distribution $P(Y_k|X_k,H_k)$ follows from (8)-(9); the dependency of $Y_k$ on past dynamics $D_{1:k-1}$ is not written explicitly, however always assumed. The procedure of (10)-(11) is referred to as filtering, and the quantity $P(X_{1:k},H_k|Y_{1:k})$ as the filtered distribution.

Intractability of exact filtering

The filtered distribution is difficult to maintain, since it involves continuous ($X_{1:k}$) and discrete ($H_k$)variables that are dependent on each other. For every state of $S_k$ a separate probability density function (pdf) is needed for representing belief of $X_{1:k}$ conditioned on $S_k$. The predictive distribution for the next slice requires summing out $S_k$ (see (10), what yields a representation in the form of a mixture of $k$ pdf's. At slice $k + 2$ (after summing over $S_{k+1}$), the exact representation will be a mixture with $k(k + 1)$ pdfs that were used at slice $k$. Clearly, iterating this procedure yields a distribution that has a form of a mixture with $O(k!)$ components, making the exact computation intractable.

The intractability of the filtered density is typical to other switching state-space models, e.g. Switching Kalman Filters. There exist a family of approximate inference methods applicable to such models (see [19]). The assumed-density filtering (ADF) approach is followed for it is deterministic and suited for on-line implementations. ADF [4], [18] approximates the filtered distribution with a tractable family. After one-slice filtering (10)-(11), the filtered distribution will no longer be a member of the assumed family. ADF projects it back to such member of the family that offers the closest approximation in the Kullback-Leibler (KL) [7] sense.

Approximate on-line filtering

1) Representation: The joint filtered distribution is approximated by the following factorial family

$$P(X_{1:k},H_k\,|Y_{1:k})\approx Q_k(S_k,C_k)\prod_{i=1}^{k}Q_k(X_i)\,Q_k(Z_k^{(i)})\,,\qquad(12)$$

where $Q_k$ denotes appropriate marginal distribution. Factorizing the joint distribution of discrete nodes $H_k=\{S_k,C_k, Z_k^{(1)},...,Z_k^{(k)}\}$ with a product of univariate and bivariate models sidesteps maintaining a large table with probabilities for every combination of their states. The nodes $\{S_k,C_k\}$ are directly coupled, so a bivariate model is chosen for a closer approximation. For simplicity, every continuous node is represented separately, $Q_k(X_i)$, although these are coupled with other variables. A variable $X$ jointly represents the mean and covariance of a Gaussian kernel. The "Normal-Inverse Wishart" family is used to approximate the marginal

$$Q_k(X_i)=\varphi(X_i|\theta_{i,k}),\qquad(13)$$

because this family is conjugate to the Gaussian generative kernel (Appendix II-A). The hyperparameters $\theta_{i,k}$ are specific to the posterior on $X_i$, after observing the kth datum.

2) One-slice filtering: After processing observation $Y_{k-1}$ the ADF algorithm maintains an approximation to the filtered distribution $P(X_{1:k-1},H_{k-1}|Y_{1:k-1})$ in the form (12). When $Y_k$ arrives, this distribution is updated. Executing (10) yields an approximate predictive density $P_r(X_{1:k},H_k)\,P(X_{1:k},H_k|Y_{1:k-1})$. Executing (11) yields

$$P(X_{1:k},H_k|Y_{1:k})=\frac{1}{L_k}\,P(Y_k|X_k,H_k)P_r(X_{1:k},H_k).\qquad(14)$$

The expression (14) does not admit the assumed factorial representation (12). The nearest in the KL-sense factorial distribution is the product of marginals [7], so ADF recovers the assumed family by computing the marginals of (14). As with any ADF method, only approximate marginals can be found because the previous filtering steps were already approximate.

The marginals are computed efficiently for two reasons. First, the model is sparse: as can be seen from (6) -(9), when a label $S_k = m$ is set, then out of all auxiliary variables, only $Z_k^{(m)}$ is referenced. If $Z_k^{(m)} = j$ is set, only variable $X_j$ and dynamics $D_j$ contribute to the likelihood of observation $Y_k$. Thus, when the marginals of (14) are computed, the variables that do not affect the new observation are present only in the predictive distribution $P_r(H_k, X_{1:k})$ and they marginalize to unity. Therefore, the joint distribution does not have to be found, only its necessary marginals. Second, finding the marginals of the predictive distribution is simple, because most of the hidden variables admit deterministic transitions.

Algorithm

1) Computing marginals: Below the marginalization results are discussed; details are provided in the Appendix I.

The marginal on the counter and switch is given by

$$Q_k(S_k, C_k) \propto \sum_{j=0}^{k-1} \lambda_j P_r(S_k, C_k, Z_k^{(S_k)} = j), \qquad (15)$$

$$\lambda_j = P_\delta(D_k \mid D_j) \int_x P(O_k \mid X_k = x) Q_{k-1}(X_j = x) \qquad (16)$$

The term $P_r$ and an analytical solution to the integral are given in Appendix I. For $j \geq 1$, the quantity $\lambda_j$ is the likelihood of $Y_k$ when the past observation of the current person was $Y_j$. The quantity $\lambda_0$ is the likelihood of $Y_k$ when it starts a new trajectory; in this case one has to replace $P_\delta$ with $P_{\delta 0}$ and $Q_{k-1}(X_j)$ with $\pi(X)$ in (16). Note that, due to integration of model parameters $X$, the term $\lambda$ acts as a Bayesian model selector. The "broad" prior density $\pi$ leads to an integral that takes almost uniform, but small, values for a broad range of $O_k$. The integrals involving $Q_k(X_j)$ are peaked around values similar to the past features $O_j$. Thus, when the observed appearance $Q_k$ is far from any of the past appearances $O_j$, then likelihood of introducing a new trajectory is high. When $Q_k$ is close to one of the past $O_j$, then introduction of a new trajectory is penalized by small $\lambda_0$. The motion constraints, represented by $P_{\delta 0}(D_k)$ and $P_\delta(D_k|D_j)$, act similarly. Introduction of a new trajectory depends on a balance between the prediction of $D_k$ by the initial distribution $P_{\delta 0}$, and the prediction of $D_k$ by one of the past dynamics $D_j$.

The marginal on an $i$th, $i = 1,...,k$, auxiliary variable is given by

$$Q_k(Z_k^{(i)}) \propto \sum_{S_k=1}^{k} \sum_{C_k=1}^{k} \sum_{j=0}^{k-1} \lambda_j P_r\left(S_k, C_k, Z_k^{(i)}, Z_k^{(S_k)} = j\right). \qquad (17)$$

The summations in this expression can be computed efficiently because the pointers $Z_k^{(i)}$ and $Z_k^{(m)}$ are deterministic when conditioned on $S_{k-1}$ and the past pointers.

The marginal $Q_k(X_k)$ is a mixture of $k$ densities. A procedure MMatch (Appendix II) replaces the mixture with a single "Normal-Inverse Wishart" density as required by (13)

$$Q_k(X_k) = \mathtt{MMatch}\left(\sum_{j=0}^{k-1} w_j \varphi\left(X_k \mid \theta^j\right)\right), \qquad (18)$$

$$\varphi(X_k|\theta^j) \propto P(O_k|X_k)\varphi(X_{k-1}|\theta_{j,k-1}), \qquad (19)$$

where the weights $w_j$ are probabilities of assigning $Y_k$ to $Y_j$ regardless of the counter and the label. Recall from the previous discussion, that our model assumes a Dirichlet prior for variable $X_k$. The predictive density for $X_k$ is a mixture of the global prior $\pi(X_k)$ and $k - 1$ Delta distributions $\delta(X_k - X_j), j = 1,...,k\text{-}1$. Accordingly, the filtered density is a mixture obtained by updating each component for the predictive density. Mixture component $\varphi(X_k|\theta^j)$ is a Bayesian posterior obtained when $X_k$ was a copy of $X_j$, and $\varphi(X_k|\theta^0)$ - in case when $X_k$ was sampled from the prior. The MMatch operation finds such unimodal pdf that preserves the moments of the mixture.

The marginal $Q_k(X_j), j = 1,...,k - 1$, is a mixture of two pdfs

$$Q_k(X_j) = \text{MMatch}(w_j\varphi(X_j|\theta^j)+(1 - w_j)\ \varphi(X_j|\theta_{j,k\text{-}1})) \tag{20}$$

The first mixture component, $\varphi(X_j|\theta^j)$, is the posterior, if the variable $X_k$ was a copy of $X_j$. In this case the posterior is the same as in (19). The second mixture component corresponds to the case when $X_k$ was not a copy of $X_j$. In this case, variables $X_j$ and $Q_k$ are independent, thus the posterior $\varphi(X_j|\theta_{j,k\text{-}1})$ does not change.

2) Limiting memory usage: The generative model assumes up to $k$ different individuals within $k$ observations. Under our factorial approximation, representing pdf on association variables $H_k$ requires memory of size $O(k^2)$. Also $O(k)$ dynamical components $D_{1:k}$ and $O(k)$ parameters $\theta_{1:k,k}$ have to be stored.

It is rare in the real-world that every observation corresponds to a different person. The number of simultaneously tracked persons is limited to some maximum $K$. At any slice $k$ the number of variables $Z_k^{(i)}$, and the domains of the counter and indicator variables are $k_{max} = \min(k,K)$. To further restrict the memory demand, a limit $M$ of the number of dynamics $D$ and hyperparameters $X$ that are preserved in memory is set. After processing $Y_k$, the corresponding $\{D_k,\theta_{k,k}\}$ is saved into the memory, and if $k > M$, such memory element $\{D_j,\theta_{j,k}\}$ is pruned, $1 \leq j < k$, that minimizes the criterion

$$v(j)=\sum_{m=1}^{k_{max}}\sum_{n=1}^{k_{max}}P_r(S_k = n, C_k = m, Z_k^{(n)} = j)\,, \tag{21}$$

The prediction $P_r(S_k,C_k,Z_k^{(n)}=j)$ weights the contribution (denoted $\lambda_j$) of the $j$th memory element to the posterior on indicator $S_k$ and counter $C_k$ (15). The prediction when summed over possible counters and indicators, measures the practical value of the $j$th memory element for resolving associations. This criterion selects an observation that is the least likely to be an endpoint of any trajectory. After pruning, the contribution $\lambda_j$ of the removed element cannot be calculated, so it has to be ascertained that $\lambda_j$ is weighted by zero in future filtering steps. A consistent way is by setting the posterior $Q_k(Z_k^{(n)}=j)=0$ and renormalizing, for all $n = 1,...,k_{max}$. The deterministic transitions of auxiliary variables in the model guarantee that the prediction for $Z_\tau^{(n)}=j$ will be zero for $\tau > k$.

3) Estimating label and counter: After one-slice filtering, the distribution $Q_k(S_k,C_k)$ provides the solution to the tracking task. The observation $Y_k$ is given the most likely label according to the marginal on indicator; $l_k=\text{argmax}_m Q_k (S_k=m)$. The marginal on the counter, $Q_k(C_k)$, estimates the number of distinct individuals observed within data $Y_{1:k}$.

Experiments

The model of the invention was tested by tracking people observed in a building. In the first experiment the tracking accuracy of the approach was measured and compared with the Markov chain Monte Carlo (MCMC) and MHT methods. In the second experiment the accuracy was compared in two cases:

(1) when tracking was based exclusively on the appearance, and
(2) when tracking was based exclusively on dynamics. This experiment evaluates the impact of appearance features on the overall tracking accuracy.

Setup

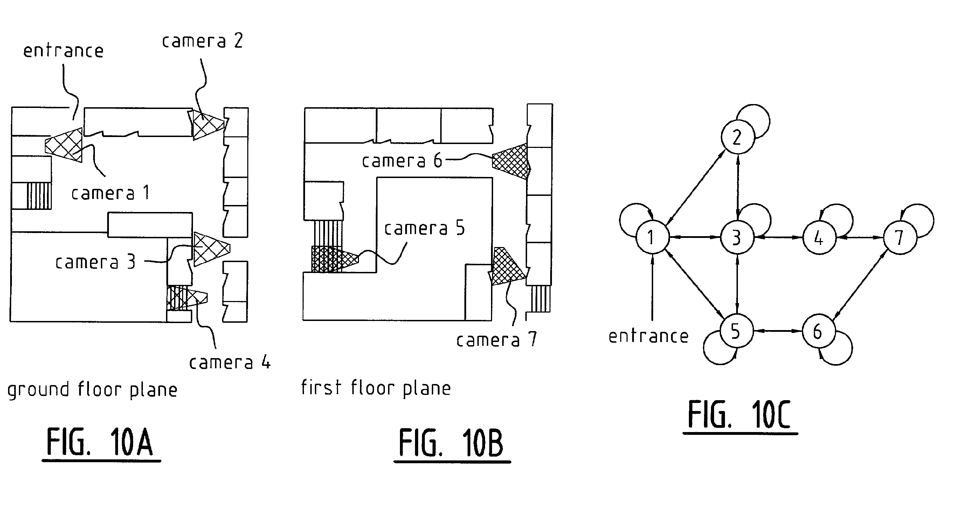

70 observations were recorded, $Y_{1:70}$, of 5 persons who were observed in an office-like environment with 7 non-overlapping cameras. Figs. 10A and 10B show the topology of camera locations and their viewing fields.

1) Colour features: From a video sequence with a pass of a person through a FOV a single frame was selected. In this frame the pixels representing the person were manually found. The original RGB space was transformed into a colour-channel normalized space [9] to suppress the effects introduced by the colour of the illuminating light. The person's image was split into three fixed regions as in Fig. 12. The regions are our heuristic for describing people. For each region the 3D average colour was computed, obtaining in total a 9D feature. Unlike colour histograms, such features provide a low dimensional summary of colour content and its geometrical layout.

The method requires a prior distribution $\pi(X)$ on means and covariances of kernels X that are assumed to generate the appearance features. This distribution $\pi(X)$ is a "Normal-Inverse Wishart" density. Its parameters $\theta_0$ = $\{a_0, \kappa_0, \eta_0, C_0\}$ were set as follows: the expected features $a_0 = 0_{9 \times 1}$ (9 dimensional zero vector); the scale $\kappa_0$ = 100; the degrees of freedom $\eta_0$ = 9 (dimensionality of observations), the matrix $C_0 = 10^{-3} I_{9 \times 9}$, where $I_{9 \times 9}$ is a 9 dimensional identity matrix. Parameter $C_0$ with small eigenvalues defines relatively "sharp" kernels. Since the means $m$ are not known, the scale $\kappa_0$ is set to a large value.

2) Dynamic features: A pass of a person through a FOV is described with dynamic features $D = \{L, E, Q, T\}$. The term $L$ is the camera location; $L \in \{1,2,3,4,5,6,7\}$; $T$ is the time of observation; variable $E(Q)$ denotes the frame border through which the object enters (leaves) the camera FOV. Variables $E$, $Q$ took the values: "left", "right", "other".

The model $P_\delta$ of Markovian paths (transitions) is defined as $p(L_n, E_n | L_p, Q_p) p(T_n | T_p)$. The first quantity is the probability of moving directly from location $L_p$ when quitting the FOV via border Qp to location $L_n$ and entering the FOV via border $E_n$. The possible transitions in the environment are sketched in Fig. 10C. All transitions marked with an arrow have equal nonzero probability; all other have zero probability. The term $p(T_n | T_p)$ is the probability of being observed at time $T_n$ if the previous observation was at time $T_p$ regardless of the locations. A binary model $p(T_n | T_p)$ is used that prevents a person appearing at different locations at the same time. The distribution $P_{\delta 0}(L, E)$ gives the likelihood of starting a path at FOV $L$ via border $E$. In this case it was only possible via left border of FOV 1.

Experiment 1

Given the videos, the true trajectories were manually recovered and marked with true labels. The method was evaluated by comparing the estimated trajectories with the true ones. The tracking accuracy is defined as follows. Given an estimated trajectory the true labels of observations are counted, and it is assumed that this trajectory describes the person with the most frequent label. The observations with other labels within this trajectory are considered as wrongly classified. The ratio of wrongly classified to all observations within the trajectory makes the classification error. Tracking accuracy is measured by the average of such errors over all estimated trajectories. An additional criterion is the number of estimated trajectories.

The tracker is run with the maximum number of objects $K$ = 10 and memory limit $M$ = 10. Fig. 11A shows the marginal distributions on labels $Q_k(S_k)$ and Fig. 11B shows counter $Q_k(C_k)$ after filtering subsequent observations, $k$ = 1,...,70. A single filtering step deals with a single observation $Y_k$, thus each column in the table presents filtered marginal distribution, where the probability is indicated in grey-scale (darker - higher). The true labels of objects are given as dots in the appropriate cells. An example of a recovered trajectory is shown in Fig. 13 as a sequence of local appearances $Y_i$ with a common label $S_i$ = 5.

The MCMC approach [20] finds trajectories by sampling partitions of the complete set of observations. A single partition defines trajectories of all hypothetical objects. This method was tried for sampling $10^3$ and $10^4$ partitions. In both settings, after sampling the partition with the highest posterior probability was taken as the solution.

The tracking accuracy of the compared methods is summarized in Table II. The results for the MCMC method are shown as means from ten independent runs. It is observed that the described hybrid model found the correct number of persons and returns nearly exact trajectories. The accuracy of the trajectories estimated with MCMC or MHT method does not match with the accuracy of trajectories found by our method. Moreover, sampling always indicated 6 or 7, and MHT 8, distinct persons in the data set.

Table II

| Classification results for the proposed model versus the MHT and MCMC methods. | | | | |
|---|---|---|---|---|
| | Hybrid model | MHT | MCMC with $10^3$ samples | MCMC With $10^4$ samples |
| average error | 5% | 21% | 20% $\pm$ 0.6 | 12% $\pm$ 0.5 |
| number of objects | 5 | 8 | 6.5 $\pm$ 0.3 | 6.5 $\pm$ 0.3 |

Experiment 2

An important feature of the approach is that the observation noise is described with a Gaussian model that uses a full covariance matrix. Representing a distribution on a full covariance matrix is expensive, therefore, the approach is most effective with low dimensional appearance features. However, one expects that more accurate trackers can be build with the increasing dimensionality of the appearance features. In this experiment we evaluate the influence of the appearance features on the overall tracking accuracy. First, the accuracy of tracking based exclusively on the appearance is compared with the accuracy of tracking based exclusively on dynamics. Second, the kernels obtained in the following two cases are also compared: (i) when the association was based only on the colour features, and (ii) when the association was based on dynamics and colour features.

Fig. 14A presents the posterior distributions on labels obtained when tracking used exclusively the appearance features. The average error was 40%. This experiment shows that the low-dimensional appearance features have little discriminative power. Fig. 14B shows the posterior distributions on labels obtained when tracking was based exclusively the dynamic features. In this case the average error was 38%. The experiment shows, that the dynamics and the assumed model for Markovian transitions $P_\delta$ do not uniquely determine the correct trajectories. However, as seen from the previous experiments, the dynamics jointly with appearance features lead to accurate estimation of trajectories.

After processing 70 observations the algorithm maintains $M = 10$ Gaussian kernels representing the intrinsic colour properties (M is the assumed practical limit; in principle there should be 70 kernels). Every kernel $X_j$ is represented by a posterior distribution over its parameters $\varphi(X_j|\theta_{j,70})$ conditioned on all 70 observations, because filtering updates distributions on all kernels in memory. Given the hyperparameters $\theta_{j,70}$ the expected mean $E[\mathbf{m}_j]$ and the expected covariance $E[\mathbf{V}_j]$ of the jth kernel are found; $E[\mathbf{m}_j] = \mathbf{a}_{j,70}$ and $E[\mathbf{V}_j] = \mathbf{C}_{j,70}/(\eta_{j,70} - d-1)$. The kernels and the appearance features have $d = 9$ dimensions. For visualization, a 2 dimensional PCA projection of the original data input is found and applied it to the expected kernels. Figs. 15A and 15B present the projections of the observed appearance features (as points) and the expected kernels (as ellipses). Note, that both plots present 10 kernels; some kernels overlap.

Figs. 15A and 15B confirm that the appearance features alone do not distinguish between the persons. The ten kernels inferred using only appearance similarities (Fig. 14B) form only two clusters. In Fig. 15A it is seen that when the dynamic features supported tracking, then the estimated kernels closely correspond to latent appearance features of the tracked persons. For the considered tracking application, the low-dimensional appearance features jointly with the spatio-temporal features, allow for accurate data association.

Conclusions

A technique for tracking multiple objects with non-overlapping cameras is described. The technique is based on the idea to identify each object with an unique label and to define a probabilistic dependency between the labels and observations of objects. In such approach, trajectories can be recovered by finding posterior probability distributions on the labels conditioned on the observations. However, the posterior distribution cannot be computed exactly. The essential feature of the approach is that by casting the tracking task into a probabilistic inference problem, a variety of approximate inference methods can be applied.

An assumed-density filtering (ADF) approximation for computing the posterior probability distributions has been applied in the present model. These distributions take the form of mixtures with an intractable number of component densities. Each component arises from a combination of labels, i.e., it corresponds to a hypothetical trajectory. ADF assumes a tractable family, and approximates the mixture with such a function from the family that is the closest in the Kullback-Leibler sense [4]. In contrast to an MHT approximation, the ADF approximation does not discard selected components, but replaces the entire mixture with a new density, in such way that the moments of the original density are preserved. The experiments showed superior performance of the ADF approximation compared with the MHT method.

In the experiments, the deterministic ADF approximation performed superior to a stochastic method (Markov chain Monte Carlo, MCMC). The experiments also confirmed that the accuracy of the MCMC approximation improves with increasing computational resources. However, the increased accuracy of the MCMC approximation comes at a computational cost that might be prohibitive for on-line applications.

The proposed model assumes Gaussian noise in the appearance features of objects. A Bayesian estimation of mean and covariance of a Gaussian density under data association uncertainty is used. These parameters are considered as latent variables jointly distributed with a 'Normal-Inverse Wishart' density. It has been shown how such a density can be used within an ADF algorithm. Our formulation avoids iterative search for maximum-likelihood estimates of the mean and covariance (e.g. using Expectation-Maximization, as in [20]). Representing a full covariance matrix can be expensive, therefore the proposed method is most effective with low dimensional appearance features. The experiments indicated, that such features, jointly with spatio-temporal information about objects, provide enough discriminative capability to distinguish between objects.

A difficult aspect of tracking in wide areas is estimation of the number of individual trajectories, that is, objects represented by the observations. This task resembles statistical model selection problems, where one has to decide about the number of model parameters (e.g. hidden units, mixture components) that are necessary to explain the data. In principle, our method does not constrain the number of objects, since for every observation a new latent descriptor (a Gaussian kernel) is introduced, corresponding to a new object. Our model is closely related to a Dirichlet model, where overfitting is avoided due to Bayesian treatment of model parameters, which are integrated from the likelihood of the data. Additionally to this property, the tracking model of the present invention takes advantage of (prior) motion constraints that penalize unnecessary introduction of trajectories.

In the above on-line tracking has been considered. The focus was on inference with the assumed-density filtering algorithm. One of the extensions of this work is to allow improving association of an observation given some range of the future observations. A convenient inference method for this purpose is the Expectation-Propagation (EP) algorithm. The EP [18] approximates an intractable posterior density with a tractable family, and iteratively improves the approximation using all available data (as opposed to the current ADF method, which performs only one iteration). The EP has been already shown successful for a "fixed-lag" improvement of posterior distributions in time-series models [21].

Another line of future research involves application of sequential Monte Carlo inference (particle filter) to the proposed model. Particle filters immediately lead to on-line algorithms. Moreover, approximating an intractable posterior distributions with samples rather than functions, allows to apply more complicated noise models for appearance features. Although the presented Gaussian model already performed well, more complicated models might be necessary in environments with more difficult noise conditions.

Background estimation

According to another aspect of the present invention, a probabilistic model for robust estimation of features of foreground objects is described, and it is demonstrated how spatial and temporal correlations can be taken into account in a flexible way, without much additional computational cost. We describe our model as a hybrid dynamic Bayesian network (with latent discrete child and continuous parent nodes). The model is generative in nature, and reflects our a-priori assumptions about the visual scene (such as smooth object/shadow regions and a quasi-static background process). Exact computation of required quantities is intractable and we derive an approximate Expectation Propagation (EP) algorithm that works essentially in linear time in the number of pixels, regardless of the correlation structure among them. An attractive feature of the model is that it allows for learning important image regions or object shapes easily. Moreover, background estimation can be readily coupled in a transparent and consistent way to subsequent processing.

Model

We denote each RGB pixel of a video stream as $y(k, t)$ where $k = (i, j)$ with $i$ and $j$ corresponding to the vertical and horizontal spatial indices and $t$ denoting the time frame. To simplify notation we treat k as a linear index and let $k = 1,...,K$ with $K$ being the number of pixels per frame. We also use the boldface notation $\mathbf{y}(t)$ to denote all the pixels at $t$'th frame.

Each pixel has a binary indicator $r(k, t) = \{back = -1, fore = 1\}$, that indicates whether $y(k, t)$ is associated with background or foreground object. For modelling shadows, we introduce a similar and independent binary indicator, $c(k, t)$ with domain {no-shadow = -1, shadow = 1}. This enumeration leaves a possibility that a foreground object can be under a shadow as well. We will denote the collection of indicators in the t'th frame as $\mathbf{r}(t)$ and $\mathbf{c}(t)$ and refer to them as masks.

Visual scenes that we are interested in contain smooth shadow and object regions. Therefore, the corresponding masks, when viewed as a binary images, will exhibit long range correlations. A popular approach for modelling such correlations is by a Markov Random Field (MRF), where a positive coupling is assumed between adjacent pixels. Whilst a powerful and compact model, inference and especially learning in MRF's tend to be computationally expensive.

We present an alternative approach for introducing long range correlations on the binary masks. Our approach is based on the simple observation that signs of a collection of correlated Gaussian variables are also correlated. We define a linear dynamical system (a Kalman filter model) on a collection of latent variables $x(k, t)$, from which we obtain binary indicators $r(k, t)$ by thresholding.

Analogous models were proposed for unsupervised learning of static binary patterns [30], visualisation [36] and for classification [38]. To our knowledge, however, these ideas were not employed in a dynamical visual scene analysis context.

Prior on masks

Linear dynamical systems are widely used state space models for continuous time series. In this model, data is assumed to be generated independently from a latent Markov process that obeys a single linear regime

$$s(0) \sim N(m,P) \qquad s(t) \sim N(As(t\text{-}1), Q) \qquad x(t) \sim N(Ws(t), R) \qquad (35)$$

Here, $m$ and $P$ are prior mean and covariance, $Q$ and $R$ are diagonal covariance matrices and $A$ and $W$ are transition and observation matrices that describe the linear mappings between $s(t)$, $s(t-1)$ and $x(t)$. By integrating over $s(1:T)$, it is easy to see that this model induces on $x(1:T)$ a Gaussian distribution with a constrained (but in general full) covariance matrix. A tractable extension to this model is useful for modelling piecewise linear regimes with occasional regime switches:

$$o(t) \sim p(o)$$

$$s(t) \sim [o(t) \quad onset]N(s(t-1), Q) + [o(t) = onset]N(m, P)$$

Here, $o(t)$ is a binary variable that indicates a regime switch and [text] denotes an indicator, that evaluates to 1 (or 0) whenever the proposition "text" is true (or false). When $o(t)$ = onset, we switch to a new regime by "reinitializing" the state vector from the prior.
To convert this model for real valued data into one for binary data, we use a clipping mechanism analogous as described in [30]. See Figs. 17A-17D as an example. Under this model, quantization of the corresponding hidden variables yields binary masks r and c:

$$onset \text{ iff } r(k, t-1) = back \text{ for all } k = 1...M \text{ or } t=1 \quad o(t)=\{ \qquad no\text{-}onset \text{ otherwise}$$

$$s_r(t) \sim [o(t) \text{ onset}]N(A_r s_r(t\text{-}1), Q_r) + [o(t)=onset]N(m_r, P_r)$$

$$x_r(t) \sim N(W_r s_r(t), R_r)$$

$$r(k, t) = sgn(x_r(k, t))$$

Appropriately chosen $W_r$ and $A_r$ yield typical $x(k, t)$ that are smooth functions of $k$ and $t$, hence their signs also alternate slowly. We use this property to model smooth object masks. When an object leaves the scene in the previous time frame, i.e. when all indicators switch to $r(k, t-1)$ = back for $k = 1,...,M$, we trigger the onset indicator by setting $o(t)$ = onset. For shadow masks, we use a simpler model without regime switching:

$$s_c(0) \sim N(m_c, P_c) \qquad s_c(t) \sim N(A_c s_c(t-1), Q_c)$$

$$x_c(t) \sim N(W_c s_c(t), R_c) \qquad c(k, t) = sgn(x_c(k, t))$$

Generative model for pixel values

The pixels of the background image are assumed to be quasi-static. However, due to camera jitter and long term deviation in the illumination conditions, the pixel values are not exactly constant (See Figs. 16A-16C). The background pixel values, denoted as $b(k, t)$, are assumed to be generated from the following linear dynamical system:

$$s_b(0) \sim N(m_b, P_b) \qquad s_b(t) \sim N(A_b s_b(t-1), Q_b) \qquad b(t) \sim N(W_b s_b(t), R_b)$$

The rationale behind this model is simple: Suppose that $W_b$ is equal to a "snap-shot" of the background image at time 0 and $A_b$ = 1. In this case $s_b(t)$ is just a scalar and we can interpret it as a global intensity variable that undergoes a random walk with transition noise variance $Q_b$. In general, we can represent the background image with multiple basis vectors arranged as columns of $W_b$. The expansion coefficients $s_b$ will correspond to a low dimensional representation and the associated variables $(A, Q, W, R)^b$ can be learned offine to reflect the expected variation in the background image.

The foreground objects may have a variety of colours and textures depending upon the observed scene (e. g. highway, office). Hence, the prior distribution should be selected on a case by case basis, according to the features which one believes are important. We let

$$f(k, t) = p(f|\mu(t))$$

where $\mu(t)$ is a parameter vector. When an object leaves the scene, as indicated by $o(t)$, the parameter vector is reinitialized

$$\mu_{new} \sim p(\mu)$$

$$\mu(t) = [o(t) \qquad onset]\mu(t - 1) + [o(t) = onset]\mu_{new}$$

where $p(\mu)$ is a suitable prior distribution. An unrealistic, but simple example is to model individual foreground pixels as independent Gaussian variables, given their mean and covariance

$$p(f|\mu(t)) \sim N(\mu(t), R_f) \qquad p(\mu(t)) \sim N(m_\mu, P_\mu) \qquad (36)$$

where we assume the variance $R_f$ and hyperparameters $m_\mu$, $P_\mu$ to be known. Pixel values and the masks render the observed image as

$$\rho(k, t) = [c(k, t) = \text{no-shadow}] \, 1 + [c(k, t) = \text{shadow}] \, \rho$$

$$y(k, t) = \rho(k, t)([r(k, t) = \text{fore}] \, f(k, t) + [r(k, t) = \text{back}] \, b(k, t))$$

Here, $0 < \rho < 1$ is a fixed parameter modelling the amount of illumination drop due to shadows. The graphical model is shown in Figure 18.

Inference

For object identification, we are interested in various marginals of the smoothed density $p(\mu(1 : T)|y(1 : T))$ or the filtering density $p(\mu(t)|y(1 : t))$ (for online operation). In either case, the latent binary variables $c, r$ render the model an intractable hybrid graphical model [31], where desired marginals can be computed only approximately.

To select a suitable inference method, consider the model structure: given the masks $r, c$, we could integrate over the background pixel process analytically (since it is a KFM). In principle, we could sample from the masks, however, unless the continuous latent parents $s_c$ and $s_r$ are low dimensional, the prior probabilities of masks can not be computed easily. One needs to sample from $s_c$ and $s_r$ and this renders Rao-Blackwellized particle filtering or Gibbs sampling computationally expensive [25].

Alternatively, one could approximate the prior by a mean-field approximation. However, due to the hard clipping mechanism, mean field with factorized Gaussians as the approximating family would break down (since Kullback-Leibler divergence between any Gaussian and a clipped Gaussian becomes ∞) and we need to relax clipping with a sigmoidal soft threshold or use a more exotic approximating family.

Expectation Propagation

Here, we investigate an alternative deterministic approximation method, based on Expectation propagation [32]. EP is an iterative message-passing algorithm and generalizes Loopy Belief Propagation (LBP) [28], in that it is directly applicable to arbitrary hybrid graphical models, including the model we have introduced. One can view EP as a local message passing algorithm on a factor graph [29] where messages are passed between factors (potentials representing local dependencies), and beliefs (marginal potentials). Unlike multinomial or Gaussian models, where all marginals stay within a closed family, in hybrid models, beliefs computed from mixed messages may have complicated forms (e.g. mixtures, clipped Gaussians). In such cases, EP replaces a belief with a potential from an approximating exponential family, usually in KL sense, i.e. by matching moments. The quality of the approximation depends, how well these "summary statistics" represent the exact beliefs [32].

We implemented each time-slice of our model with a simple factor graph as shown in Fig. 18B. This structure corresponds to a fully factorized approximation to the joint posterior. We use Gaussians and multinomials as natural approximating families for the continuous and discrete variables. The message update equations are derived as particular cases of the general scheme in [32]. In our case, the approximation evaluates to four possible families: Gaussian, multinomial, mixture of Gaussians or mixture of clipped Gaussians. For the first two, the approximation is exact. For mixture of Gaussians and clipped Gaussians, moment matching equations can be derived easily.

Experiments

We demonstrate first the accuracy of EP approximation to the prior p(r). Inference in this submodel is equivalent to calculating the integral of the Gaussian distribution $ds_r p(x_r|s_r)p(s_r)$ in one of the $2^K$ orthants specified by the mask configuration. In one dimension, this integral can be evaluated easily as shown in the previous section; however in higher dimensions we need to reside to approximations. Fortunately, we can ensure by construction that the Gaussian is positive definite, hence the clipped Gaussian will be unimodal and we expect a factorized EP approximation to converge. In the right panel of Fig. 19 we show results of an experiment where we have computed the likelihood of all configurations of r for $K = 8$, ranked them and compared to importance sampling. We observe in this and similar experiments that EP converges in 2-3 iterations and is indeed very accurate.

In the following experiment we illustrate the quality of feature estimation using artificial data generated from the model where objects are assumed to have a single colour as defined in Eq. 36. Mask parameters are set to $A_r = \gamma I$, $Q_r = (1 - \gamma) I$ with the fudge factor $\gamma = 0.95$. $W_r$ is taken as a truncated Fourier basis, the same as in the previous experiment. Other parameters are $(m_r, P_r) = ([1.5, 0.5, 0.5], 0.2I)$. Parameters for shadow masks are identical. For the background process $(A, Q, R, m, P, \rho)^b = (1, 0.1^2, 50I, 1, 0.1^2, 0.6)$, elements of $W_b$ are drawn uniformly from [0, 255]. Figs. 20A-20D show a typical run where the colour features are estimated very accurately in this parameter regime.

To illustrate the performance on real data, we use the video sequence shown in Figs. 16A-16C. Our goal is to identify persons and associate a unique identity based on colour features. We have trained the parameters of the background process $(A, Q, W, R, m, P)^b$ using an EM algorithm from frames of the empty scene. Mask parameters are the same as in the synthetic data experiment; in principle these can also be learned from presegmented data.

A single Gaussian will not be powerful enough to represent the multimodal foreground colour distribution; a richer model such as a mixture would be more appropriate. For example, we might assume that the foreground pixels $f(k, t)$ are drawn independently from a flat distribution and display estimated features as colour histograms in HSV space. The colour histograms reflect the similarities between objects, see Fig. 21.

Conclusion

We have described a model for robust estimation of appearance features where background estimation need not be viewed as an independent preprocessing step. Automatic identity estimation based on these features requires additional machinery; which can be readily coupled in a transparent and consistent way to the presented model. This allows us properly characterize any uncertainty in the foreground detection, which arguably is important for robust object identification.

An attractive feature of the model is that any image subregion with an arbitrary shape (e.g. full frames, scanlines or randomly scattered patches) may be processed, since given s variables, the spatial ordering of pixels is irrelevant. Additionally, the dimensionality of s variables can be tuned to trade off correlations and computation time (which scales as $O(S^2TK)$, where $S$ is the maximum dimension of variables $s_r, s_c, s_b$.

The model, as it now stands, assumes that at most one object is observed at a given time frame. This assumption holds for small image regions, but for larger images the model has to be extended, e.g. by introducing additional subgraphs for each new object. Whilst the local message passing mechanism offers a computationally tractable solution, it remains to be seen, whether such an extension to the framework described here can be implemented in practice.

<u>APPENDIX I</u>

<u>Filtering algorithm</u>

Probabilistic filtering in the model involves computing the marginals of the filtered distribution (14). Below, the details of marginalization are reported. A symbol $\theta_{0,k} \equiv \theta_0$ is used (the parameters of the fixed prior $\pi(X)$), and

$$Z_k^{(1:k)} \equiv \left\{ Z_k^{(1)}, \ldots, Z_k^{(k)} \right\}; \quad Z_k^{(\neg i)} \equiv Z_k^{(1:k)} \setminus Z_k^{(i)}, \quad X_{\neg i} \equiv X_{1:k} \setminus X_i .$$

<u>A. Computing marginals of the filtered distribution</u>

a) Indicator and Counter: The filtered distribution on these variables is represented as a probability table $r_k(m,n) = Q_k(S_k = m, C_k = n)$. It is found by marginalizing the filtered distribution (14)

$$Q_k(S_k, C_k) = \frac{1}{L_k} \sum_{Z_k^{(1:k)}} \int_{X_{1:k}} P(Y_k \mid H_k, X_k) P_r(X_{1:k}, H_k) . \qquad (22)$$

The sparse structure of the model is exploited to show that the multiple summations and multiple integrals are reduced to a sum w.r.t. a single $Z_k^{(m)}$ and an integral w.r.t. single $X_k$. Next, a closed-from solution is provided to the integral. From now on, a fixed $S_k = m$ is assumed. The likelihood can be simplified after (8)-(9);

$$P(Y_k \mid H_k, X_k) = P(Y_k \mid X_k, Z_k^{(m)}) . \qquad (23)$$

The predictive distribution is expressed in a factorial form;

$$P_r(X_{1:k}, H_k) = P(X_k \mid X_{1:k-1}, H_k) P_r(X_{1:k-1}, H_k) =$$

$$= \left( \pi(X_k) [Z_k^{(m)} = 0] + \delta(X_k - X_j) [Z_k^{(m)} > 0] \right) P_r(X_{1:k-1}, H_k) \qquad (24)$$

where (24) follows from (6)-(7). Recall that $[f]$ is a binary indicator symbol. These results are put back to the sought marginal (22);

$$Q_k(S_k, C_k) \propto \sum_{Z_k^{(1:k)}} \int_{X_{1:k}} P(Y_k \mid X_k, Z_k^{(m)}) \left( \pi(X_k) [j = 0] + \delta(X_k - X_j) [j > 0] \right) P_r(X_{1:k-1}, H_k)$$

where $j \equiv Z_k^{(m)}$. Marginalization w.r.t. $Z_k^{(i)}$, $i \neq m$, removes this variable from the predictive distribution $P_r(X_{1:k-1}, H_k)$, which is reduced to $P_r(X_{1:k-1}, S_k, C_k, Z_k^{(m)})$. Now, consider the case when $Z_k^{(m)} = 0$. It can be seen that variables $X_{1:k-1}$ appear only in the prediction, which after marginalization is reduced to $P_r(S_k, C_k, Z_k^{(m)})$. Now, consider the case, when $Z_k^{(m)} = j$, such that $j > 0$. In this case, the variables $X_{1:k-1}$ other than $X_j$ marginalize out from the predictive distribution which is reduced to

$P_r(X_j, S_k, C_k, Z_k^{(m)})$. This distribution can be expressed as $Q_{k-1}(X_j) P_r(S_k, C_k, Z_k^{(m)})$, because the filtered distribution at the slice $k - 1$ was approximated with a factorial family (see (10)

$$Q_k(S_k, C_k) \propto \int_{X_k} P(Y_k \mid X_k, Z_k^{(m)} = 0) \, \pi) \, \pi_k) \, P_r(S_k, C_k, Z_k^{(m)} = 0) +$$

$$\sum_{j=1}^{k-1} \int_{X_k} P(Y_k \mid X_k, Z_k^{(m)} = j) \int_{X_j} \delta(X_k - X_j) Q_{k-1}(X_j) P_r(S_k, C_k, Z_k^{(m)} = j).$$

Integration w.r.t. $X_j$ is reduced using the definition of a Delta function. This function is equal one if $X_j = X_k$, and zero otherwise. The marginal compactly is denoted

$$Q_k(S_k, C_k) \propto \sum_{j=0}^{k-1} \lambda_j P_r(S_k, C_k, Z_k^{(m)} = j),$$

where $\lambda_j$ denotes the integral w.r.t. $X_k$. The likelihood is expanded using (23): $P(Y_k \mid Z_k^{(m)}, X_k) = P(D_k \mid Z_k^{(m)}) P(O_k \mid X_k)$, and the integral becomes

$$\lambda_0 = P_{\delta_0}(D_k) \int_x P(O_k \mid X_k = x) Q_{k-1}(X_j = x), \qquad j > 0,$$

The integration variable $x = \{\mathbf{m}, \mathbf{V}\}$ denotes jointly mean and covariance. The observation model is $P(O_k \mid x) = N(O_k; \mathbf{m}, \mathbf{V})$. The densities $Q_{k-1}(X_j = x)$ and $\pi(x)$ are "Normal-Inverse Wishart" models, parameterized respectively as $\varphi(x \mid \theta_{j,k-1})$ and $\varphi(x \mid \theta_0)$. This integral has a standard solution [10]. For $j > 0$:

$$\lambda_j = P_\delta(D_k \mid D_j) T(O_k; \mathbf{a}_{j,k-1}, (1 + \kappa_{j,k-1}) \mathbf{C}_{j,k-1}, 1 + \eta_{j,k-1}), \tag{25}$$

where $T$ denotes a multivariate T-distribution (see Appendix II-C). In case when $j=0$, then $P_\delta$ is replaced with $P_{\delta 0}$ and $\theta_{j,k-1}$ with $\theta_0$. The normalization term $L_k$ is recovered by first

finding an unnormalized table $r_k$, and then applying the normalization constraint in the standard way.

$$r_k(m,n)=\frac{1}{L_k}\sum_{j=0}^{k-1}\lambda_j P_r(S_k=m,C_k=n,Z_k^{(m)}=j)\,. \qquad (26)$$

The predictive distribution $P_r(S_k,C_k Z_k^{(m)})$ is discussed in Section I-B of this appendix.

b) Auxiliary pointers: There are $k$ variables $Z_k^{(1)},\cdots,Z_k^{(k)}$. Each marginal distribution is represented as $s_{i,k}(n)=Q_k(Z_k^{(i)}=n)$. The variable $Z_k^{(k)}$ is a priori deterministically set, so marginal distributions $Q_k(Z_k^{(i)})$ for $i=1,\ldots,k-1$ are found;

$$Q_k(Z_k^{(i)})=\frac{1}{L_k}\sum_{S_k,C_k}\sum_{Z_k^{(\neg i)}}\int_{X_{1:k}} P(Y_k\,|\,H_k,X_k)\,P_r(X_{1:k},H_k)\,. \qquad (27)$$

It can be shown that all auxiliary pointers other than $Z_k^{(i)}$ and $Z_k^{(S_k)}$ marginalize to unity (similarly as in the previous marginal). For a fixed $Z_k^{(i)}=n$ or $Z_k^{(S_k)}=j$, all memory variables different than $X_n$ or $X_j$ integrate out to one. For clarity, the summation over $S_k$ is being split into two cases: (1) $S_k=i$; (2) $S_k\neq i$. The index $n$, $0\leq n\leq k-1$, enumerates the domain of $Z_k^{(i)}$

$$s_{i,k}(n)=\frac{1}{L_k}\lambda_n\sum_{C_k}P_r(S_k=i,C_k,Z_k^{(i)}=n)+\beta_i(n)\,,$$

where $\beta_i(n)$ is a helper term, denoting the sum over $S_k\neq i$:

$$\beta_i(n)=\frac{1}{L_k}\sum_{S_k\neq i,C_k}\sum_{j=0}^{k-1}\lambda_j P_r(S_k,C_k,Z_k^{(i)}=n,Z_k^{(S_k)}=j)\,.$$

First a special case $\beta_i(k-1)$ is calculated. From deterministic transitions (5) follows that the variables $Z_k^{(i)}$ and $Z_k^{(S_k)}$ cannot be simultaneously equal to $k-1$, so this state is removed from the integration. The predictive distribution in this case is very simple (see I-B)

$$\beta_i(k-1)=\frac{1}{L_k}\sum_{S_k\neq i,C_k}\sum_{j=0}^{k-2}\lambda_j P_r(S_k,C_k,Z_k^{(i)}=k-1,Z_k^{(S_k)}=j)\,. \qquad (28)$$

Note, that the normalization term $L_k$ is already available from (26). Now, the normalization constraint is exploited to efficiently find $\beta_i(n)$, $0 \leq n \leq k - 2$. The following relation is obtained

$$\beta_i(n)=s_{i,k-1}(n)\,(1-\sum_{j=1}^{k}r_k(i,j)-\beta_i(k-1))\,,$$

where $s_{i,k-1}=Q_{k-1}(Z_{k-1}^{(i)}=n)$ and $r_k$ represents the normalized posterior $Q_k(S_k,C_k)$. Except for $s_{i,k-1}\,(n)$, this term does not depend on $n$, hence it is only computed once.

c) Current memory node: To find the assumed density $Q_k(X_k)$ first a marginal is computed

$$P_k(X_k)=\frac{1}{L_k}\sum_{S_k,C_k}\sum_{Z_k^{(1:k)}}\int_{X_{-k}}P(Y_k|H_k,X_k)\,P_r(X_{1:k},H_k)=\sum_{j=0}^{k-1}w_j\varphi\,(X_k|\theta^j)\,. \qquad (29)$$

This marginal is a mixture of $k$ pdfs, where the $j$th mixture component $\varphi(X_k|\theta^j)$ corresponds to posterior on $X_k$ if the last observation of the current object was at time $j$. Given this condition each component is found by Bayesian updating of $\varphi(X|\theta_{j,k-1})$ with the observed $O_k$. In case of Gaussian models, this is a standard procedure [10]; it is reported in Appendix II-A.2 as "NiWUpdate"

$$\theta^j = \text{NiWUpdate } (O_k, \theta_{j,k-1}).$$ (30)

The mixing weights are

$$w_j = \frac{1}{L_k} \sum_{m=1}^{k} \sum_{n=1}^{k} \lambda_j P_r(S_k = m, C_k = n, Z_k^{(m)} = j).$$ (31)

Note that the summed terms are already computed once in (26).

The assumed density has to be a single $N\text{-}IW$ function; $Q_k(X_k) = \varphi(X_k | \theta_{k,k})$ rather than a mixture. A single pdf is found in this family that is the closest in the KL-sense to the mixture with the "moment matching" procedure (Appendix II-A.3)

$$\theta_{k,k} = \text{MMatch}(\theta^0, \ldots, \theta^{k-1}, w_0, \ldots, w_{k-1}).$$

d) Past memory nodes: To find the assumed density $Q_k(X_j)$, $1 < j < k$ first a marginal is computed

$$P_k(X_j) = \frac{1}{L_k} \sum_{S_k, C_k} \sum_{Z_k^{(1:k)}} \int_{X_{-j}} P(Y_k | H_k, X_k) P_r(X_{1:k}, H_k) = w_j \varphi(X_j | \theta^j) + (1 - w_j)\ \varphi(X_j | \theta_{j,k-1})$$

This marginal is a mixture of two $N\text{-}IW$ pdfs. The first corresponds to update of the $j$th memory node if $Z_k^{(S_k)} = j$; it is defined by parameters $\theta^j$ from (30). The second is the previous density on this node, represented by $\theta_{j;k-1}$. The mixing weights are $w_j$ and $1 - w_j$ as defined in (31). The factorial approximation requires that this marginal is expressed as a single pdf from the $N\text{-}IW$ family; $Q_k(X_j) = \varphi(X_j | \theta_{j,k})$. The closest density is found in the family to the mixture;

$$\theta_{j,k} = \text{MMatch}(\theta^j, \theta_{j,k-1}, w_j, 1 - w_j).$$

## B. Predictive distribution

At the $k$th slice, the predictive distribution describes the dependency of the latent variables on the past data $P(H_k, X_{1:k} | Y_{1:k-1})$, or shortly $P_r(H_k, X_{1:k})$. It has been argued that the ADF approximation does not require the joint distribution, but only two specific marginals. These marginals are derived below as case (A) and case (B).

Case A): In (26) a distribution $P_r(S_k, C_k, Z_k^{(m)})$ is used, where $m = S_k$. The predictive distribution is computed with the HMM forward algorithm, because the considered variables evolve as a first-order Markov process as defined by our generative model (2)-(5).

Case B): In (28) a predictive distribution is used $P_r(S_k, C_k, Z_k^{(m)} = k-1, Z_k^{(n)} = j)$ where $m \neq n$ and $j < k - 1$. This distribution can also be computed with HMM forward algorithm.

## APPENDIX II

### A. Joint density on mean and covariance of a Gaussian kernel

A variable $X = \{m, V\}$ jointly represents a mean $\mathbf{m}$ and covariance $\mathbf{V}$ of a Normal distribution. Joint density can conveniently be represented on these variables [10] via a product $P(m|V)P(V)$, where the conditional model $P(m|V)$ is a Normal ($N$) w.r.t. $\mathbf{m}$; and the marginal $P(\mathbf{V})$ is an Inverse Wishart ($IW$) w.r.t. $\mathbf{V}$ (see II-B). The joint $N$-$IW$ density is denoted as:

$$\varphi(X|\theta) = N(\mathbf{m};\ \mathbf{a}, \kappa\mathbf{V})\, IW(\mathbf{V};\ \eta, \mathbf{C}), \qquad (34)$$

where $\theta = \{a, \kappa, \eta, \mathbf{C}\}$ are the parameters. The vector $\mathbf{a}$ is the marginal expected value of $\mathbf{m}$. The parameter $\kappa$ is a scaling term. The scalar parameter $\eta$ and the matrix $\mathbf{C}$ generalize the 'scale' and 'shape' parameters of the Gamma densities; $\mathbf{C}$ together with $\eta$ gives the marginal expected for

**V: C**/( $\eta$ - $d$ - 1).

1) Prior: Theoretically, the model of (34) does not allow to represent a noninformative distribution. Practically, such parameters can be set $\theta_0$ so that the resulting prior density $\pi(X) = \varphi(X|\theta_0)$ is sufficiently vague to express the practical ignorance about **m** and **V**.

2) Bayesian update: The *N-IW* model is convenient mathematically, because it is conjugate to $N(O;\mathbf{m},\mathbf{V})$ – the distribution that generates observed $O$. If the prior $\varphi(X|\theta)$ on $X = \{\mathbf{m},\mathbf{V}\}$ is in the *N-IW* family, then the posterior

$$\varphi(X|\theta_n) \propto N(O;\ \mathbf{m},\mathbf{V})\,\varphi(X|\theta)$$

is also expressed with the same family, only with the updated parameters $\theta_n$ [10]. The update equations are reported as a 'NiWUpdate' procedure:

$$\theta_n = \text{NiWUpdate}(O,\theta),$$

$$\kappa_n = 1/(1 + 1/\kappa), \qquad \mathbf{a}_n = (O + \frac{1}{\kappa}\mathbf{a}), \quad \eta_n = 1 + \eta,$$

$$\mathbf{C}_n = \mathbf{C} + \frac{1}{1+\kappa}(O - \mathbf{a})(O - \mathbf{a})^{\mathrm{T}}.$$

3) Moment matching: The *N-IW* family allows for convenient minimization

$$\text{argmin}_\theta \text{KL}\left(\varphi(X|\theta) \middle\| \sum_{j=1}^{N} w_j \varphi(X|\theta^j)\right).$$

This operation finds the best approximation in the family to the mixture of *N-IW* densities

$$\theta = \text{MMatch}(\theta^1, \ldots, \theta^N, w_1, \ldots w_N).$$

The parameters of Normal are found exactly

$$\mathbf{a} = \left(\sum_{j=1}^{N} w_j \eta_j a_j \mathbf{C}_j^{-1}\right)\left(\sum_{j=1}^{N} w_j \eta_j \mathbf{C}_j^{-1}\right)^{-1},$$

$$\kappa = \sum_{j=1}^{N} w_j \kappa_j,$$

and the parameters of Inverse Wishart approximately:

$$\eta = \eta_{argmax_j w_j},$$

$$\mathbf{C} = \eta \sum_{j=1}^{N} w_j \eta_j \mathbf{C}_j^{-1}.$$

Inverse Wishart distribution

The *IW* model is a multivariate generalization of the Inverse Gamma distribution. A random $d \times d$ matrix $\mathbf{X}$ is Inverse Wishart distributed with parameters: scalar $\eta$ and matrix $\mathbf{C}$, if the density of $\mathbf{X}$ is

$$IW(X;\eta,C) = \frac{|C|^{\eta/2}}{Z_{d\eta}}|X|^{-(\eta+d+1)/2} exp\left(-\frac{1}{2}tr[X^{-1}C]\right),$$

where

$$Z_{d\eta} = 2^{\eta d/2} \pi^{d(d-1)/4} \prod_{i=1}^{d} \Gamma\left(\frac{\eta+1-i}{2}\right).$$

T distribution

A random $d$-dimensional vector $\mathbf{x}$ is $\mathbf{T}$ distributed with parameters: scalar $\eta$, vector $\mathbf{m}$ and matrix $\mathbf{V}$, if the density of $\mathbf{x}$ is

$$T(x;m,V,\eta) = \frac{\Gamma(\eta/2)}{\Gamma((\eta-d)/2)}|\pi V|^{-1/2}\left((x-m)^{\mathrm{T}} V^{-1}(x-m)+1\right)^{-\eta/2}.$$

**REFERENCES**

[1] C.E. Antoniak. Mixtures of Dirichlet processes with applications to Bayesian nonparametric problems. *Annals of Statistics,* 2:1152-1174, 1974.

[2] Yaakov Bar-Shalom and Xiao-Rong Li. *Estimation and Tracking: Principles, Techniques and Software.* Artech House, 1993.

[3] Matthew J. Beal, Zoubin Ghahramani, and Carl E. Rasmussen. The infinite hidden Markov model. In *Advances in Neural Information Processing Systems (NIPS) 14,* 2002.

[4] Xavier Boyen and Daphne Koller. Tractable inference for complex stochastic processes. In *Proc. of Conf. on Uncertainty in Artificial Intelligence,* pages 33-42. Morgan Kaufman, 1998.

[5] Q. Cai and J.K. Aggarwal. Tracking human motion in structured environments using a distributed-camera system. *IEEE Transactions on Pattern Analysis and Machine Intelligence,* 21(11):1241-1247, November 1999.

[6] R. Collins, A. Lipton, H. Fujiyoshi, and T. Kanade. Algorithms for cooperative multisensor surveillance. *Proceedings of the IEEE,* 89(10):1456-1477, October 2001.

[7] Thomas M. Cover and Joy A. Thomas. *Elements of Information Theory.* John Wiley & Sons, New York, 1991.

[8] A. Doucet, N. de Freitas, and N.J. Gordon, editors. *Sequential Monte Carlo Methods in Practice.* Springer Verlag, 2001.

[9] M.S. Drew, J. Wei, and Z.N. Li. Illumination-invariant color object recognition via compressed chromaticity histograms of color-channel-normalized images. In *Proc. of Int. Conf. on Computer Vision,* pages 533-540, 1998.

[10] Andrew Gelman, John B. Carlin, Hal S. Stern, and Donald D. Rubin. *Bayesian Data Analysis.* Chapman & Hall, 1995.

[11] W.R. Gilks, S. Richardson, and D.J. Spiegelhalter, editors. *Markov Chain Monte Carlo in Practice.* CRC Press, London, 1996.

[12] Gregory D. Hager and Peter N. Belhumeur. Efficient region tracking with parametric models of geometry and illumination. *IEEE Transactions on Pattern Analysis and Machine Intelligence,* 20(10):1025-1039, October 1998.

[13] Timothy Huang and Stuart Russell. Object identification: A Bayesian analysis with application to traffic surveillance. *Artificial Intelligence,* 103(1-2):1-17, 1998.

[14] Michael Isard and Andrew Blake. Condensation-conditional density propagation for visual tracking. *International Journal of Computer Vision,* 29(1):5-28, 1998.

[15] Finn V. Jensen. *Bayesian Networks and DecisionGraphs.* Springer-Verlag, New York, 2001.

[16] Y. Li, A. Hilton, and J. Illingworth. A relaxation algorithm for real-time multiple view 3d-tracking. *Image and Vision Computing,* 20(12):841-859, October 2002.

[17] David G. Lowe. Robust model-based motion trackingthrough the integration of search and estimation. *International Journal of Computer Vision,* 8(2):113-122, August 1992.

[18] Thomas Minka. *Expectation Propagation for approximate Bayesian inference.* PhD thesis, MIT, 2001.

[19] Kevin P. Murphy. Dynamic Bayesian Networks: Representation, Inference and Learning. PhD thesis, UC, Berkley, 2002.

[20] H. Pasula, S. Russell, M. Ostland, and Y. Ritov. Tracking many objects with many sensors. In *Proc. of Int. Joint Conf. on Artificial Intelligence,* pages 1160-1171, 1999. Stockholm.

[21] Yuan Qi and Thomas Minka. Expectation propagation for signal detection in flat-fading channels. In *Proc. of IEEE Int. Symposium on Information Theory,* 2003. Yokohama, Japan.

[22] Carl E. Rasmussen. The infinite Gaussian mixture model. In *Advances in Neural Information Processing Systems (NIPS) 12,* pages 554-560, 2000.

[23] Lawrence K. Saul and Michael I. Jordan. Mixed memory Markov models: Decomposing complex stochastic processes as mixtures of simpler ones. *Machine Learning,* 37(1):75-87, 1999.

[24] N. Ukita and T. Matsuyama. Real-time cooperative multi-target tracking by communicating active vision agents. In *Int. Conf. on Pattern Recognition,* pages II: 14-19, 2002.

[25] C. Andrieu, N. de Freitas, A. Doucet, and M. I. Jordan. An introduction to MCMC for machine learning. *Machine Learning,* to appear, 2002.

[26] P. Fearnhead. Exact and efficient Bayesian inference for multiple changepoint problems. Technical report, Dept. of Math. and Stat., Lancaster University, 2003.

[27] N. Friedman and S. Russell. Image segmentation invideo sequences. A probabilistic approach. In *Proc. UAI,* 1997.

[28] W. T. Freeman J. Yedidia and Y. Weiss. Understanding belief propagation and its generalizations. In *IJCAI, 2001.* Distinguished Papers Track.

[29] F. R. Kschischang, B. J. Frey, and H.-A. Loeliger. Factor graphs and the sum-product algorithm. *IEEE Trans-*

actions on Information Theory, 47(2):498-519, February 2001.

[30] D. D. Lee and H. Sompolinsky. Learning a continuous hidden variable model for binary data. In *NIPS\*98, 1998.*

[31] U. Lerner and R. Parr. Inference in hybrid networks: Theoretical limits and practical algorithms. In *Proc. UAI-01,* pages 310-318, Seattle, Washington, August 2001.

[32] T. Minka. *Expectation Propagation for approximate Bayesian inference.* PhD thesis, MIT, 2001.

[33] J. Rittscher, J. Kato, S. Joga, and A. Blake. A probabilistic background model for tracking. In *Proc. European Conf. Computer Vision, 2000.*

[34] C. Stauffer and W.E.L. Grimson. Adaptive background mixture modelling for realtime tracking. In *CVPR'99,* pages 246-252, 1999.

[35] J. Sullivan, A. Blake, and J. Rittscher. Statistical foreground modelling for object localisation. In *Proc. of ECCV,* pages 307-323, 2000.

[36] M. E. Tipping. Probabilistic visualisation of high-dimensional binary data. In *NIPS\*98, 1998.*

[37] D. Wang, T. Feng, H.-Y. Shum, and S. Ma. A novel probability model for background maintenance and subtraction. In *15th Int. Conf. on Vision Interface,* pages 109-117.

[38] C.K.I. Williams and D. Barber. Bayesian classification with Gaussian processes. *IEEE Transactions* on *PAMI,* 20:1342.1351, 1998.

**Claims**

**1.** A method for tracking of multiple objects or individuals with non-overlapping or partly overlapping cameras, wherein each object is identified with a label and wherein a probabilistic dependency between the labels and the observations of objects is defined wherein the posterior probability distributions in the model are in the form of mixtures, wherein the mixture is approximated.

**2.** A model according to claim 1, wherein a Dirichlet process mixture model is used for estimation of the number of distinct objects from the data and wherein the Dirichlet process mixture model is extended with auxiliary variables that allow to model Markovian dependencies between observations of the same object.

**3.** A method according to claim 1 or 2, wherein the appearance features of a single object are assumed to be generated by a single Gaussian density, wherein the mean and covariance are estimated with Bayesian inference, wherein a "Normal-Inverse Wishart" is used as a prior joint density for mean and covariance.

**5.** A method according to any of claims 1-4, wherein an observation of an object includes appearance features defined as three color vectors, wherein each color vector is the average (R, G, B) color of pixels within one of three horizontal regions R1, R2, R3 selected from the object's image.

**6.** A method according to any of claims 1-5, wherein a joint predictive distribution of the model latent variables, preferably according to formula (10), is updated preferably according to formula (11).

**7.** A method according to any of the claims 1-6 wherein the filtered distribution is approximated, preferably by formulas (11) and (14).

**8.** A method for classification of pixels in a video sequence, wherein the class of each pixel is identified with a binary mask variable, and wherein a dependency between observed pixels and their masks is defined.

**9.** A method according to claim 8, wherein the binary masks are a priori correlated and each binary mask is associated with a continuous variable, wherein a mask is obtained by taking the sign of the continuous variable, and wherein all continuous variables are a priori jointly distributed according to a multivariate Gaussian density.

**10.** A method according to claim 8 or 9, wherein the masks' correlations are maintained across consecutive frames of a video stream, wherein the continuous variables are assumed to evolve between frames according to a linear Gaussian process.

**11.** A method according to any of claims 8-10, wherein the posterior distribution on the masks conditioned on the observed pixel colours is computed with the Expectation-Propagation algorithm, wherein a Gaussian densities are used as the approximating family for the continuous variables.

**12.** A method according to any of claims 1-7 and according to any of claims 8-11.

**13.** A system comprising one or more processing units, two or more non-overlapping cameras operatively connected to the processing units and software stored in memory to execute the method according to any of claims 1-10.

camera/scene B

camera/scene A

camera/scene C

**FIG. 1**

FIG. 2

FIG. 4

FIG. 6

FIG. 3

FIG. 5

FIG. 7

FIG. 8

FIG. 9

FIG. 10C

FIG. 10B

first floor plane

camera 5

camera 6

camera 7

FIG. 10A

ground floor plane

camera 2

camera 1

camera 3

camera 4

entrance

## FIG. 11A

## FIG. 11B

EP 1 596 334 A1

skip area

$R_1$

$R_2$

$R_3$

total
height

skip area

FIG. 12

cam 1   cam2   cam 2   cam 5   cam 6   cam 6   cam 5   cam 3   cam 4   cam 7   cam 7   cam 4   cam 3   cam 1

FIG. 13

FIG. 14A

FIG. 14B

EP 1 596 334 A1

FIG. 15A

FIG. 15B

FIG. 16A

FIG. 16B

FIG. 16C

EP 1 596 334 A1

FIG. 17A

FIG. 17B

FIG. 17C

FIG. 17D

FIG. 18A

FIG. 18B

FIG. 19

EP 1 596 334 A1

objects on background with shadows y

## FIG. 20A

estimated object color: expected color $E[\mu]$

## FIG. 20B

estimated object masks p(r=fore)

FIG. 20C

color-channel averaged std. deviation σ[μ]

FIG. 20D

estimated object masks, shadow gray, foreground black

FIG. 21

## EUROPEAN SEARCH REPORT

**European Patent Office**

**Application Number**

EP 04 07 7917

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | W. ZAJDEL, A.T. CEMGIL AND B.J.A. KRÖSE: "Online Multicamera Tracking with a Switching State-Space Model" PROC. OF IEEE INT. CONF. ON PATTERN RECOGNITION, ICPR 2004, August 2004 (2004-08), XP002311882 CAMBRIDGE, GB * the whole document * | 1-7,13 | G06T7/20 G06T5/00 |
| X | W. ZAJDEL AND B.J.A. KRÖSE: "Gaussian Mixture Model for Multi-sensor Tracking" PROC. OF THE 15TH BELGIUM-NETHERLANDS CONF. ON ARTIFICIAL INTELLIGENCE, BNAIC 2003, October 2003 (2003-10), pages 371-378, XP002311883 NIJMEGEN, NL | 1,5-7,13 | |
| Y | * chapters 1-4 * | 2,3,6,7 | |
| X | W. ZAJDEL AND B.J.A. KRÖSE: "Approximate Learning and Inference for Tracking with Non-overlapping Cameras" PROC. OF INT. CONF. ON ARTIFICIAL INTELLIGENCE AND APPLICATIONS, AIA 2003, September 2003 (2003-09), pages 70-75, XP002311884 BENALMADENA, ES | 1,5-7,13 | TECHNICAL FIELDS SEARCHED (Int.Cl.7) G06T |
| Y | * chapters 2-5 * | 2,3,6,7 | |
| X | JAVED O ET AL: "Tracking across multiple cameras with disjoint views" PROCEEDINGS NINTH IEEE INTERNATIONAL CONFERENCE ON COMPUTER VISION, 13 October 2003 (2003-10-13), pages 952-957, XP010662484 * chapters 2-4 * | 1,13 | |

-/--

The present search report has been drawn up for all claims

| Place of search | Date of completion of the search | Examiner |
|---|---|---|
| Munich | 22 April 2005 | Rockinger, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

**European Patent Office**

**Application Number**

EP 04 07 7917

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | HUE C ET AL: "A particle filter to track multiple objects" PROCEEDINGS 2001 IEEE WORKSHOP ON MULTI-OBJECT TRACKING IEEE COMPUT. SOC LOS ALAMITOS, CA, USA, July 2001 (2001-07), pages 61-68, XP010554355 ISBN: 0-7695-1171-6 * page 65, left-hand column * | 2 | |
| Y | PAO L Y ET AL: "Determining track loss without truth information for distributed target tracking applications" PROCEEDINGS OF THE 2000 AMERICAN CONTROL CONFERENCE. ACC (IEEE CAT. NO.00CH36334) AMERICAN AUTOM. CONTROL COUNCIL DANVERS, MA, USA, vol. 6, June 2000 (2000-06), pages 4363-4367 vol., XP010516577 ISBN: 0-7803-5519-9 * page 4365 – page 4366 * | 3 | |
| A | SHERRAH J ET AL: "Continuous global evidence-based bayesian modality fusion for simultaneous tracking of multiple objects" PROCEEDINGS EIGHTH IEEE INTERNATIONAL CONFERENCE ON COMPUTER VISION, vol. 2, 7 July 2001 (2001-07-07), pages 42-49, XP010554067 * the whole document * | 1-3,5-7, 13 | **TECHNICAL FIELDS SEARCHED** (Int.Cl.7) |
| A | VERMAAK J ET AL: "Maintaining multi-modality through mixture tracking" PROCEEDINGS NINTH IEEE INTERNATIONAL CONFERENCE ON COMPUTER VISION, 13 October 2003 (2003-10-13), pages 1110-1116, XP010662505 * the whole document * | 1-3,5-7, 13 | |

-/--

The present search report has been drawn up for all claims

| Place of search | Date of completion of the search | Examiner |
|---|---|---|
| Munich | 22 April 2005 | Rockinger, O |

European Patent
Office

**EUROPEAN SEARCH REPORT**

Application Number

EP 04 07 7917

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | MENG HOWE TAN ET AL: "Multi-camera people tracking using bayesian networks" FOURTH PACIFIC RIM CONFERENCE, SINGAPORE 15-18 DEC. 2003, vol. 3, 15 December 2003 (2003-12-15), pages 1335-1340, XP010701545 ISBN: 0-7803-8185-8 * the whole document * | 1-3,5-7, 13 | |
| X | DONGSHENG WANG, TAO FENG, HARRY SHUM, SONGDE MA: "A Novel Probability Model for Background Maintenance and Subtraction" THE 15TH INTERNATIONAL CONFERENCE ON VISION INTERFACE, 27 May 2002 (2002-05-27), - 29 May 2002 (2002-05-29) pages 109-116, XP002325681 CALGARY, CANADA Retrieved from the Internet: URL:http://www.cipprs.org/vi2002/pdf/s2-5.pdf> 'retrieved on 2005-04-21! | 8-10,12 | |
| Y | * sections 1 and 3* | 11 | **TECHNICAL FIELDS SEARCHED** (Int.Cl.7) |
| X | DAR-SHYANG LEE ET AL: "A Bayesian framework for Gaussian mixture background modeling" PROCEEDINGS 2003 INTERNATIONAL CONFERENCE ON IMAGE PROCESSING. ICIP-2003. BARCELONA, SPAIN, SEPT. 14 - 17, 2003, INTERNATIONAL CONFERENCE ON IMAGE PROCESSING, NEW YORK, NY : IEEE, US, vol. VOL. 2 OF 3, 14 September 2003 (2003-09-14), pages 973-976, XP010669850 ISBN: 0-7803-7750-8 | 8,9 | |
| Y | * page 973 - page 974 * | 11 | |

-/--

The present search report has been drawn up for all claims

| Place of search | Date of completion of the search | Examiner |
|---|---|---|
| Munich | 22 April 2005 | Rockinger, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

## EUROPEAN SEARCH REPORT

Application Number

EP 04 07 7917

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | THOMAS P. MINKA: "Expectation Propagation for approximate Bayesian inference" PROCEEDINGS OF THE 17TH CONFERENCE IN UNCERTAINTY IN ARTIFICIAL INTELLIGENCE, 2 August 2001 (2001-08-02), - 5 August 2001 (2001-08-05) pages 362-369, XP002325682 SEATTLE, WASHINGTON, US Retrieved from the Internet: URL:http://research.microsoft.com/{minka/papers/ep/minka-ep-uai.pdf> 'retrieved on 2005-04-21! * the whole document * | 11 | |
| D,A | STAUFFER CHRIS ET AL: "Adaptive background mixture models for real-time tracking" PROC IEEE COMPUT SOC CONF COMPUT VISION PATTERN RECOGNIT; PROCEEDINGS OF THE IEEE COMPUTER SOCIETY CONFERENCE ON COMPUTER VISION AND PATTERN RECOGNITION 1999 IEEE, LOS ALAMITOS, CA, USA, vol. 2, 1999, pages 246-252, XP010347611 * the whole document * | 8-12 | TECHNICAL FIELDS SEARCHED (Int.Cl.7) |
| A | FRIEDMAN, N., RUSSELL, S.: "Image segmentation in video sequences: a probabilistic approach" PROCEEDINGS OF THE 13TH CONFERENCE CONFERENCE ON UNCERTAINTY IN ARTIFICIAL INTELLIGENCE, 1 August 1997 (1997-08-01), - 3 August 1997 (1997-08-03) pages 175-181, XP002325684 PROVIDENCE, RHODE ISLAND, USA Retrieved from the Internet: URL:http://www.cs.berkeley.edu/{russell/papers/uai97-shadows.ps> 'retrieved on 2005-04-21! * the whole document * | 8-12 | |

The present search report has been drawn up for all claims

| Place of search | Date of completion of the search | Examiner |
|---|---|---|
| Munich | 22 April 2005 | Rockinger, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**Application Number**

EP 04 07 7917

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

| European Patent Office | LACK OF UNITY OF INVENTION SHEET B | Application Number<br>EP 04 07 7917 |
|---|---|---|

The Search Division considers that the present European patent application does not comply with the requirements of unity of invention and relates to several inventions or groups of inventions, namely:

1. claims: 1-3,5-7,13

   tracking of multiple objects with multiple cameras
   ---

2. claims: 8-12

   classification of pixels in a video sequence
   ---